(19) Europäisches Patentamt / European Patent Office / Office européen des brevets

(11) **EP 3 114 831 B1**

(12) **FASCICULE DE BREVET EUROPEEN**

(45) Date de publication et mention
de la délivrance du brevet:
**09.06.2021   Bulletin 2021/23**

(51) Int Cl.:
*H04N 5/225* (2006.01)          *H04N 5/232* (2006.01)
*H04N 5/33* (2006.01)           *G06T 5/00* (2006.01)
*G06T 5/50* (2006.01)

(21) Numéro de dépôt: **15707385.9**

(22) Date de dépôt: **03.03.2015**

(86) Numéro de dépôt international:
**PCT/EP2015/054409**

(87) Numéro de publication internationale:
**WO 2015/132255 (11.09.2015 Gazette 2015/36)**

(54) **DÉBRUITAGE VIDÉO OPTIMISÉ POUR SYSTÈME MULTICAPTEUR HÉTÉROGÈNE**

OPTIMIERTE VIDEORAUSCHUNTERDRÜCKUNG FÜR HETEROGENES MULTISENSORSYSTEM

OPTIMISED VIDEO DENOISING FOR HETEROGENEOUS MULTISENSOR SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **03.03.2014   FR 1451719**

(43) Date de publication de la demande:
**11.01.2017   Bulletin 2017/02**

(73) Titulaire: **Safran Electronics & Defense
75015 Paris (FR)**

(72) Inventeurs:
• **BEZOT, Grégoire
  92100 Boulogne-Billancourt (FR)**
• **BUDIN, Joël
  92100 Boulogne-Billancourt (FR)**

(74) Mandataire: **Plasseraud IP
66, rue de la Chaussée d'Antin
75440 Paris Cedex 09 (FR)**

(56) Documents cités:
**US-A1- 2006 119 710     US-A1- 2009 002 501
US-A1- 2013 250 123**

**Description**

L'invention se rapporte à des techniques de débruitage vidéo optimisées.

Un système d'imagerie multicapteur hétérogène est un système de capture vidéo possédant au moins deux capteurs de types différents (le système est un système bicapteur s'il possède deux capteurs). Une séquence vidéo est considérée comme étant une séquence d'images prises à des instants donnés.

Dans le cadre de conditions de prises d'images difficiles, par exemple par faibles conditions de luminosité pour un capteur jour, ou par exemple par temps humide pour un capteur thermique bande 3, il est utile de réaliser un débruitage vidéo afin d'améliorer le rapport signal à bruit, et en particulier de réaliser un débruitage temporel.

Une technique de débruitage temporel tire parti d'un a priori temporel sur un signal vidéo. Un débruitage temporel est applicable très facilement à une vidéo captée par un capteur immobile filmant une scène stationnaire. En effet on peut alors simplement régulariser le signal selon l'axe temporel de la vidéo (par exemple à l'aide d'une moyenne glissante sur un certain nombre d'images consécutives). Cependant, dans des situations réelles, le capteur et/ou la scène sont souvent en mouvement (qu'il s'agisse par exemple de déplacements ou de vibrations), et une simple régularisation temporelle génère un flou dans la vidéo débruitée (car les différents éléments moyennés ne correspondent pas nécessairement tous au même élément de la scène). Par exemple, un capteur embarqué dans un véhicule en déplacement peut filmer une scène dans laquelle d'autres véhicules se déplacent.

Il est possible d'utiliser des techniques de débruitage temporel plus complexes faisant appel par exemple à des techniques d'estimation de mouvement, qui visent à permettre un alignement des pixels des images de la vidéo sur un référentiel commun, et donc à permettre de pratiquer une régularisation temporelle sans générer de flou. Dans l'état de l'art des techniques de débruitage temporel, on distingue ainsi la phase d'analyse du mouvement et la phase de régularisation temporelle (qui correspond à une moyenne de plusieurs images), la première étant utilisée pour compenser le fait qu'on ne sait pas moyenner des images si le capteur obtenant ces images (et/ou tout ou partie des images elles-mêmes) est en mouvement.

Cependant, les techniques de l'état de l'art montrent leurs limites dans le cadre de rapports signal à bruit faibles. En effet, dans ces conditions, l'analyse du mouvement est fortement compromise, et il s'avère très difficile de débruiter tout en préservant le signal utile. Dans de telles situations, le paramétrage de ces techniques est difficile. Généralement, suivant ce paramétrage, soit la technique est complètement inefficace, soit elle dégrade très fortement le signal utile.

Le document US 2013/250123 divulgue une méthode d'alignement spatial d'une image proche infra-rouge et d'une image visible. Le document US 2009/002501 divulgue l'utilisation d'une deuxième caméra de basse résolution pour corriger les éventuels flous des images capturées par une première caméra de haute résolution. Le document

US 2006/119710 divulgue une méthode d'obtention d'une image défloutée à partir d'une image floue prise en mouvement.

L'invention vise donc à améliorer la situation.

L'invention est définie par les revendications indépendantes. D'autres aspects de l'invention sont définis par les revendications dépendantes.

Un aspect de l'invention concerne un procédé de débruitage temporel d'une séquence d'images, ledit procédé comprenant :

/a/ une capture, à l'aide d'un premier capteur, d'une séquence de premières images correspondant à une scène donnée, chaque première image étant divisée en éléments associés chacun à un secteur correspondant de ladite première image,

/b/ une capture, à l'aide d'un deuxième capteur d'une séquence de deuxièmes images correspondant à ladite scène donnée, le deuxième capteur opérant dans une bande spectrale différente du premier capteur ou ayant une sensibilité au moins dix fois supérieure à celle du premier capteur, chaque deuxième image correspondant à une première image, chaque deuxième image étant divisée en éléments associés chacun à un secteur correspondant de ladite deuxième image, chaque couple d'élément et de secteur associé de la deuxième image correspondant à un couple d'élément et de secteur associé de la première image correspondante,

/c/ une obtention, par un circuit de calcul, d'une première séquence d'images issue de la séquence de premières images et d'une deuxième séquence d'images issue de la séquence de deuxièmes images,

/d/ une obtention, par un circuit de calcul, pour chaque secteur de chacune des images des première et deuxième séquences d'images d'une pondération associée, la pondération étant telle qu'elle permet de faire ressortir le secteur dont la variance spatiale est la plus importante,

/e/ une obtention, par un circuit de calcul, d'une première séquence pondérée d'images, dont chaque élément de chaque image est égal à l'élément correspondant de la première séquence d'images pondéré par la pondération associée au secteur associé audit élément correspondant, et d'une deuxième séquence pondérée d'images, dont chaque élément de chaque image est égal à l'élément correspondant de la deuxième séquence d'images pondéré par la pondération associée au secteur associé audit élément correspondant,

/f/ une obtention, par un circuit de calcul, d'une séquence d'images de variances améliorées résultant d'une combinaison de séquences d'images comprenant la première séquence pondérée d'images et la deuxième séquence pondérée d'images,

/g/ une obtention, par un circuit de calcul, d'une estimation de mouvement sur la base de la séquence d'images améliorées obtenue,

/h/ une obtention, par un circuit de calcul, en fonction de l'estimation de mouvement obtenue, d'un alignement spatial des images d'une séquence d'images à afficher issue de séquences d'images correspondant à la scène donnée et comprenant la séquence de premières images et la séquence de deuxièmes images,

/i/ un débruitage temporel, par un circuit de calcul, en fonction de l'alignement spatial déterminé, de la séquence d'images à afficher.

Ce procédé est avantageux notamment en ce qu'il combine l'information issue d'au moins deux capteurs, et en ce qu'il permet ainsi d'optimiser le débruitage vidéo en effectuant une estimation de mouvement sur la base de la meilleure information disponible. Les deux capteurs étant de types différents, on peut s'attendre à ce que selon les cas, l'un ou l'autre soit plus approprié, et le procédé permet ainsi de tenir compte du meilleur des deux capteurs selon le contexte. Le procédé procède ainsi à un débruitage temporel sur la base d'un traitement dynamique des images s'appuyant sur leur contenu effectif (et non seulement sur un a priori concernant le contenu théorique des images). Par exemple, dans le cas de capteurs opérant dans des bandes spectrales différentes, la « fusion » d'informations hétérogènes issues des deux bandes spectrales permet d'optimiser le débruitage vidéo par rapport à un débruitage opéré sur chacune des deux bandes spectrales prises séparément à l'aide de techniques conventionnelles.

Un autre aspect de l'invention concerne un programme d'ordinateur comprenant une suite d'instructions qui, lorsqu'elles sont exécutées par un processeur, conduisent le processeur à mettre en œuvre un procédé selon l'aspect précité de l'invention.

Un autre aspect de l'invention concerne un support de stockage non transitoire lisible par ordinateur, ledit support stockant un programme d'ordinateur selon l'aspect précité de l'invention.

Un autre aspect de l'invention concerne un dispositif optronique pour débruitage temporel d'une séquence d'images, ledit dispositif optronique comprenant :

un premier capteur agencé pour capturer une séquence de premières images correspondant à une scène donnée, chaque première image étant divisée en éléments associés chacun à un secteur correspondant de ladite première image,

un deuxième capteur opérant dans une bande spectrale différente du premier capteur ou ayant une sensibilité au moins dix fois supérieure à celle du premier capteur, le deuxième capteur étant agencé pour capturer une séquence de deuxièmes images correspondant à ladite scène donnée, chaque deuxième image correspondant à une première image, chaque deuxième image étant divisée en éléments associés chacun à un secteur correspondant de ladite deuxième image, chaque couple d'élément et de secteur associé de la deuxième image correspondant à un couple d'élément et de secteur associé de la première image correspondante,

un circuit de calcul agencé pour obtenir une première séquence d'images issue de la séquence de premières images et une deuxième séquence d'images issue de la séquence de deuxièmes images,

un circuit de calcul agencé pour obtenir, pour chaque secteur de chacune des images des première et deuxième séquences d'images une pondération associée, la pondération étant telle qu'elle permet de faire ressortir le secteur dont la variance spatiale est la plus importante,

un circuit de calcul agencé pour obtenir une première séquence pondérée d'images, dont chaque élément de chaque image est égal à l'élément correspondant de la première séquence d'images pondéré par la pondération associée au secteur associé audit élément correspondant et une deuxième séquence pondérée d'images, dont chaque élément de chaque image est égal à l'élément correspondant de la deuxième séquence d'images pondéré par la pondération associée au secteur associé audit élément correspondant,

un circuit de calcul agencé pour obtenir une séquence d'images de variances améliorées résultant d'une combinaison de séquences d'images comprenant la première séquence pondérée d'images et la deuxième séquence pondérée d'images,

un circuit de calcul agencé pour obtenir une estimation de mouvement sur la base de la séquence d'images améliorées obtenue,

un circuit de calcul agencé pour obtenir, en fonction de l'estimation de mouvement obtenue, un alignement spatial des images d'une séquence d'images à afficher issue de séquences d'images correspondant à la scène donnée et comprenant la séquence de premières images et la séquence de deuxièmes images,

un circuit de calcul agencé pour effectuer un débruitage temporel, en fonction de l'alignement spatial obtenu, de la séquence d'images à afficher.

Ce dispositif optronique est avantageux notamment en ce qu'il permet la mise en œuvre d'un procédé selon un aspect de l'invention.

D'autres aspects, buts et avantages de l'invention apparaîtront à la lecture de la description de quelques uns de ses modes de réalisation.

L'invention sera également mieux comprise à l'aide des dessins, sur lesquels :

- la figure 1 illustre un exemple de dispositif optronique selon un mode de réalisation possible de l'invention ;
- la figure 2 illustre différentes étapes mises en œuvre par le dispositif optronique de la figure 1.

Selon un premier mode de réalisation, un procédé de débruitage temporel d'une séquence d'images comprend une capture, à l'aide d'un premier capteur, d'une séquence de premières images $A(x,y,t)$ correspondant à une scène donnée. La scène correspond au champ de vision du premier capteur. Les paramètres $x$, $y$ et $t$ désignent respectivement l'indice spatial des colonnes, l'indice spatial des lignes, et l'indice temporel du numéro d'image de la séquence.

Selon une mise en œuvre possible, le premier capteur est un capteur optronique, opérant dans le domaine visible du spectre électromagnétique, ou dans l'infrarouge ou l'ultraviolet.

La séquence de premières images peut comprendre, par exemple, 1000 images prises pendant dix secondes à des intervalles fixes de 10ms. D'autres valeurs sont évidemment possibles.

Selon le premier mode de réalisation, chaque première image (de la séquence de premières images $A(x,y,t)$) est divisée en éléments associés chacun à un secteur correspondant de ladite première image.

Selon une mise en œuvre possible, chaque élément est un pixel de l'image, c'est-à-dire la plus petite partie d'image que le capteur est en mesure de détecter. Le terme « pixel » est un acronyme anglais désormais passé dans la langue française, résultant de la contraction des mots « picture » pour image et « element » pour élément. Selon une autre mise en œuvre possible, chaque élément est un groupe de pixels (par exemple un groupe de trois pixels correspondant respectivement aux couleurs rouge, verte et bleue et représentant ensemble une couleur).

Selon une mise en œuvre, l'intersection des éléments est nulle deux à deux (pour tous les éléments de l'image) et la réunion des éléments correspond à l'image complète.

Chaque image de la séquence peut ainsi être divisée en un million de pixels (et correspondre à un carré de mille pixels par mille pixels) représentant chacun un élément, étant entendu que d'autres résolutions d'images sont bien entendu possibles.

Ainsi, dans l'expression $A(x,y,t)$ de cet exemple, $x$ désigne l'abscisse d'un pixel, qui peut varier entre 0 et 999, $y$ désigne l'ordonnée d'un pixel, qui peut varier entre 0 et 999, et $t$ désigne l'instant auquel l'image considérée de la séquence a été capturée, et peut varier entre 0ms et 999ms.

Selon une mise en œuvre possible, chaque élément est un pixel de l'image, et chaque secteur associé est un rectangle de l'image centré sur le pixel considéré. Par exemple le secteur peut être un rectangle de $2*n+1$ par $2*p+1$ pixels ($n$ et $p$ étant des entiers positifs), $2*n+1$ désignant la largeur du secteur et $2*p+1$ sa hauteur, le secteur étant centré sur le pixel considéré. Par exemple, $n=p=5$ signifie que le secteur est un carré de 11 pixels de côté. Ainsi, pour un pixel de coordonnées $(N,P)$, le secteur associé comprend tous les pixels dont l'abscisse est comprise entre $N-n$ et $N+n$ et dont l'ordonnée est comprise entre $P-p$ et $P+p$. Pour les pixels situés à moins de $n$ pixels d'un bord latéral (gauche ou droit) de l'image, ou à moins de $p$ pixels d'un bord supérieur ou inférieur de l'image (c'est-à-dire dans une zone périphérique de l'image), le secteur peut être tronqué en conséquence. Le secteur peut ainsi, dans la zone périphérique de l'image indiquée, descendre jusqu'à une dimension de $n+1$ par $p+1$ pixels (cas des quatre coins de l'image). Alternativement, les calculs qui suivent peuvent être effectués en ignorant cette zone périphérique (généralement négligeable) de l'image (pour éviter que les secteurs indiquent alors une information quelque peu biaisée que l'on peut préférer ne pas prendre en compte), c'est-à-dire en travaillant sur des images dont les bords sont rognés (images privées de cette zone périphérique de p pixels en haut, de p pixels en bas, de n pixels à gauche et de n pixels à droite).

D'autres types de secteurs sont possibles, par exemple le secteur correspondant à un élément peut être un disque centré sur cet élément. Ce disque est éventuellement tronqué (lorsque l'élément est distant d'un bord de l'image d'une distance inférieure au diamètre du disque), à moins que, de façon alternative, la zone périphérique de l'écran (pour laquelle le disque devrait sinon être tronqué) ne soit exclue comme cela a été envisagé dans l'exemple précédent. D'autres formes (que le disque ou le rectangle) sont également possibles.

Selon une mise en œuvre simplifiée (pouvant nécessiter moins de ressources notamment mémoire et processeur) mais a priori moins performante, l'image est divisée en secteurs deux à deux dépourvus d'intersection commune (l'intersection étant l'ensemble vide) et dont l'union représente l'image entière, chaque élément appartenant à l'un (seulement) des secteurs ainsi définis. Par exemple, une image de 1000*1000 pixels peut être divisées en 10000 secteurs de 10*10 pixels. Chaque élément (par exemple un pixel) est associé au secteur auquel il appartient. Ceci revient à remplacer un « secteur glissant » par un secteur fixe, qui est donc moins représentatif pour les éléments situés près de sa périphérie que pour ceux situés près de son centre. Cette mise en œuvre simplifiée est susceptible d'introduire des artefacts mais peut néanmoins améliorer la situation.

Selon le premier mode de réalisation, le procédé comprend une capture, à l'aide d'un deuxième capteur de type différent du type du premier capteur, d'une séquence de deuxièmes images $B(x,y,t)$ correspondant à ladite scène donnée.

Selon une mise en œuvre possible, le champ de vision du deuxième capteur est rigoureusement identique à celui du premier capteur. Les deux capteurs peuvent par exemple opérer via une optique commune et un prisme (ou mécanisme similaire) peut séparer l'image à destination de chaque capteur (d'autres mises en œuvre sont possibles).

Selon une mise en œuvre possible, les deux capteurs précités (qui peuvent être solidarisés de façon rigide) sont associés chacun à une optique distincte. Notamment dans cette hypothèse, le champ de vision des deux capteurs peut être légèrement différent. Le champ de vision du deuxième capteur peut en particulier être légèrement translaté par rapport à celui du premier capteur, et être affecté par une parallaxe.

Cependant, des techniques connues permettent de corriger ces phénomènes et de définir la partie commune des champs de vision respectifs des deux capteurs (cette partie commune peut alors définir la scène). Par exemple, en ce qui concerne la parallaxe, il est possible d'appliquer un traitement numérique aux données captées, ou encore (éventuellement en complément) de faire « loucher » différemment les deux capteurs selon la distance d'un objet observé (solution mécanique avec au moins un capteur mobile dont le mouvement est piloté par servomoteur). Selon une mise en œuvre possible, les parties non communes éventuelles des images des séquences de premières et deuxièmes images (c'est-à-dire des parties de la scène qui seraient vues par un capteur mais pas par l'autre) sont ignorées lorsqu'il s'agit de déterminer l'image améliorée $I(x,y,t)$ qui sera décrite ci-dessous. Selon un autre mise en œuvre, l'image améliorée $I(x,y,t)$ déterminée ci-dessous en ayant ignoré les parties non communes est par la suite complétée par les parties non communes afin de donner des informations supplémentaires potentiellement pertinentes pour l'estimation de mouvement.

Selon une mise en œuvre possible, le deuxième capteur est, comme le premier capteur, un capteur optronique, opérant dans le domaine visible du spectre électromagnétique, ou dans l'infrarouge ou l'ultraviolet. Cependant, les deux capteurs sont de types différents.

Les capteurs peuvent être de types différents en ce qu'ils opèrent dans des bandes spectrales différentes. Par exemple un capteur peut opérer dans le spectre visible et un autre dans le spectre infrarouge bande 3-5µm ou bande 8-12µm. De façon générale, les différentes bandes spectrales peuvent être notamment : la bande ultraviolette, la bande visible, la bande très proche de l'infrarouge (à la limite du visible), la « bande 1 » (infrarouge proche, de 1 à 3 µm - cette bande étant utilisée pour la détection de corps portés à températures élevées, par exemple de 1000 à 2000K), la « bande 2 » (moyen infrarouge, permettant de détecter des corps portés à une température moyenne de 600K, par exemple des avions), ou encore la « bande 3 » (lointain infrarouge, permettant de détecter des corps autour de 300K, qui (comme d'ailleurs la bande 2) peut être utilisée pour la vision de nuit.

Selon une mise en œuvre possible, deux capteurs ne sont pas considérés comme étant de types différents du seul fait qu'ils opèrent dans des sous-bandes spectrales différentes au sein de l'une des bandes spectrales citées dans les deux phrases précédentes. Par exemple, des capteurs opérant chacun dans une sous-bande distincte d'une bande donnée (par exemple la bande 2 précitée) sont considérés comme étant de même type, dans la mesure (mais seulement dans la mesure) où les propriétés de vision dans ces deux sous-bandes sont relativement homogènes (c'est-à-dire que si un capteur voit bien, alors l'autre voit également relativement bien et si l'un voit mal alors l'autre voit également relativement mal). On considère qu'un capteur « voit bien » un objet de la scène s'il capte cet objet avec un bon rapport signal sur bruit (et réciproquement il voit mal si le rapport signal sur bruit est mauvais, et donc si l'objet est difficilement distinguable du bruit). A titre d'autre exemple, selon une mise en œuvre possible dans laquelle la couleur n'est pas véritablement discriminante (compte tenu de l'usage envisagé pour le procédé), et toutes autres caractéristiques des capteurs étant égales par ailleurs, un capteur captant la lumière rouge et un autre captant la lumière bleue (ou encore verte) opèrent tous deux dans la bande de la lumière visible et sont considérés comme étant de même type.

Il est utile d'obtenir à partir d'au moins deux capteurs des informations susceptibles d'être complémentaires, ou du moins des informations susceptibles d'être telles que même si celles issues d'un capteur ne sont pas exploitables, celles issues de l'autre capteur sont susceptibles d'être exploitables (bien entendu, il n'est pas exclu que dans certaines circonstances, deux capteurs de types différents voient tous les deux parfaitement la scène, ou qu'aucun des deux ne la voie correctement). Il est également avantageux de tirer partie du fait que dans certains cas, certaines parties d'une image issue d'un capteur sont exploitables et d'autres non, alors qu'en ce qui concerne une image correspondante issue d'un autre capteur, les parties exploitables ou non exploitables sont différentes. Le procédé peut ainsi tirer le meilleur de chaque capteur, pour une même scène à un même instant.

L'usage de capteurs opérant dans des bandes spectrales différentes est avantageux car les bandes spectrales peuvent être affectées inégalement par différents paramètres météorologiques (humidité, température, précipitations de neige ou de pluie, brouillard, grêle, etc.). Elles peuvent également être affectées inégalement par d'autres paramètres tels que l'heure de la journée, la luminosité (éventuellement artificielle), les propriétés optiques des objets de la scène telles que leur propriétés de réflexion (spéculaire, diffuse ou autre), leur nature claire ou foncée, etc. Toutes sortes de paramètres sont donc susceptibles d'affecter la capture d'image de manière différente selon la bande spectrale. De surcroît la capture d'image peut s'appuyer le cas échéant sur des phénomènes physiques différents selon la bande spectrale considérée. Par exemple, un capteur dans les fréquences visibles fonctionne essentiellement en mode réflectif (lumière renvoyée par les objets de la scène), alors qu'un capteur infrarouge peut fonctionner davantage sur les rayonnements qu'émettent les objets de la scène eux-mêmes. A bas niveau de couleur (par exemple lors du couché du soleil, alors qu'il y a peu de flux), un capteur couleur peut ainsi avoir du mal à produire de l'information pertinente, alors qu'un capteur dans le proche infrarouge peut observer certains détails sans difficultés. A contrario, lorsqu'il pleut, les capteurs infrarouges peuvent être très négativement affectés (par la pluie) alors qu'un capteur dans une fréquence visible peut parfaitement distinguer les objets d'une scène. Les capteurs infrarouges fonctionnent de nuit alors qu'un capteur dans le spectre visible ne voit généralement pas bien une scène nocturne, surtout s'il s'agit d'un capteur peu sensible prévu davantage pour des conditions d'illumination du type de celles que l'on rencontre généralement de jour.

Mais selon une mise en œuvre possible, les deux capteurs peuvent également être de types différents tout en opérant tous deux dans la même bande spectrale (voire dans la même sous-bandes spectrale d'une même bande spectrale). Par exemple, les deux capteurs peuvent avoir des sensibilités très différentes. Selon une mise en œuvre possible, le premier capteur est ainsi un capteur noir et blanc très sensible (adapté pour des captures d'image en basse lumière), présentant par exemple une sensibilité de 12800 ISO (tout en maintenant un niveau de bruit faible), et le deuxième capteur est un capteur couleur beaucoup moins sensible (par exemple 100 ISO). De façon plus générale on peut considérer comme étant de types différents deux capteurs dont la sensibilité ISO de l'un est au moins dix fois supérieure à celle de l'autre (à niveau de bruit équivalent).

Selon le premier mode de réalisation, chaque deuxième image (de la séquence de deuxièmes images B(x,y,t)) est divisée en éléments (par exemple des pixels ou des groupes de pixels) associés chacun à un secteur correspondant de ladite deuxième image. Les mises en œuvre concernant la définition des éléments et des secteurs des images de la séquence de premières images A(x,y,t) sont directement transposables aux éléments et secteurs des images de la séquence de deuxièmes images B(x,y,t) et ne sont donc pas redécrites.

Chaque deuxième image (de la séquence de deuxièmes images B(x,y,t)) correspond à une première image (de la séquence de premières images A(x,y,t)) respective.

Selon une mise en œuvre possible, les deux séquences contiennent des images de résolution identique, échantillonnées à une même fréquence. Ainsi, pour chaque triplet de paramètres {xx,yy,tt} représentant une abscisse, une ordonnée et un instant d'échantillonnage, l'élément A(xx,yy,tt) de la séquence de premières images correspond (sous réserve, le cas échéant, que l'élément A(xx,yy,tt) n'appartienne pas à une zone non commune aux deux séquences d'images, telle qu'une zone périphérique des images dans le cas par exemple d'optiques distinctes, étant entendu néanmoins que des solutions permettant d'obtenir des séquences levant cette réserve ont été envisagées ci-dessus) à l'élément B(xx,yy,tt) de la séquence de deuxièmes images (il représente, de manière bijective, la même information, mesurée cependant par un capteur de type différent).

Indépendamment des résolutions et fréquences d'échantillonnage respectives des séquences de premières et deuxièmes images, chaque couple d'élément et de secteur associé {elt1, sect1} de la deuxième image correspond à un couple respectif d'élément et de secteur associé {elt2, sect2} d'une première image correspondante. Cette correspondance est bijective en cas de résolution et de fréquence d'échantillonnage identiques (par construction des capteurs ou par traitement postérieur), du moins si les éléments et les secteurs sont définis de manière identique pour les deux séquences. Dans le cas contraire, la correspondance n'est pas bijective et selon une mise en œuvre possible le procédé définit cette correspondance en conséquence (sans avoir nécessairement à modifier une des deux séquences pour l'adapter à l'autre séquence, ni a fortiori à modifier les deux séquences). Par exemple, sans avoir à effectuer de traitement (dégradation de la fréquence et/ou de la résolution d'une séquence pour l'aligner sur l'autre ou au contraire interpolation de l'autre séquence), le procédé peut associer plusieurs éléments d'une image (de haute résolution) d'une des deux séquences à un seul élément d'une image (de plus basse résolution) de l'autre séquence (dimension spatiale) et de même il peut associer plusieurs images d'une des deux séquences à une même image de l'autre séquence (dimension temporelle). Dans le cas où les fréquences respectives des deux séquences sont différentes mais ne sont pas multiples l'une de l'autre, par exemple s'il y a pendant un même intervalle de temps k images d'une séquence pour p images de l'autre séquence avec k et p entiers, k étant inférieur à p, p n'étant pas multiple de k, un procédé selon une mise en œuvre possible associe à l'image numéro pp (avec pp variant entre 0 et le nombre d'images de la séquence rapide moins 1) de la séquence rapide l'image (pp*k)/p (le signe «/» désignant la division entière) de la séquence dont la fréquence d'échantillonnage est plus faible. De même, dans le cas où les résolutions horizontales (respectivement verticales) respectives des deux séquences sont différentes mais ne sont pas multiples l'une de l'autre, par exemple s'il y a k pixels horizontaux (respectivement verticaux) dans une image d'une séquence pour p pixels horizontaux (respectivement verticaux) dans une image de l'autre séquence avec k et p entiers, k étant inférieur à p, p n'étant pas multiple de k, un procédé selon une mise en œuvre possible associe à un pixel horizontal pp (avec pp compris entre 0 et le nombre de pixels d'une ligne, respectivement d'une colonne, moins 1) d'une image de la séquence dont les images ont la plus grande résolution horizontale (respectivement verticale) un pixel horizontal (respectivement vertical) (pp*k)/p (le signe « / » désignant la division entière) de l'image de l'autre séquence (de résolution horizontale, respectivement verticale, plus faible).

Selon une mise en œuvre possible du premier mode de réalisation, le procédé comprend une capture, à l'aide d'un troisième capteur de type différent des types des premier et deuxième capteurs (voire à l'aide d'un nombre arbitraire de capteurs supplémentaires de types tous différents deux à deux et tous différents des types des premier et deuxième capteurs) d'une séquence de troisièmes images C(x,y,t) correspondant à ladite scène donnée (voire de séquences d'images en nombre arbitraire correspondant à ladite scène donnée). Les mises en œuvre décrites pour le deuxième capteur se transposent aux capteurs supplémentaires éventuels.

Selon le premier mode de réalisation, le procédé comprend une obtention, par un circuit de calcul, d'une première séquence d'images a(x,y,t) issue de la séquence de premières images A(x,y,t). Le procédé comprend également une obtention, par le circuit de calcul, d'une deuxième séquence d'images b(x,y,t) issue de la séquence de deuxièmes images B(x,y,t). Le circuit de calcul peut être notamment un circuit électronique de type FPGA, ASIC, PAL, etc. Le circuit de calcul peut également être un ensemble comprenant un processeur et une mémoire (par exemple RAM, ROM, EEPROM, Flash, mémoire optique, mémoire magnétique, etc.), la mémoire stockant un programme d'ordinateur agencé pour mettre en oeuvre cette obtention de première et deuxième séquences d'images lorsqu'il est exécuté par le processeur.

Selon une mise en œuvre possible, la première séquence d'images est tout simplement égale à la séquence de premières images. De même, selon une mise en œuvre possible, la deuxième séquence d'images est égale à la séquence de deuxièmes images. Dans ce cas, l'obtention des premières et deuxièmes séquences d'images peut être transparente, c'est-à-dire ne nécessiter aucune opération. Elle peut également être réalisée par un simple passage de pointeur, un pointeur vers la première (respectivement deuxième) séquence d'images étant défini comme étant une copie du pointeur vers la séquence de premières (respectivement deuxièmes) images. L'obtention des première et deuxième séquences d'images peut enfin être réalisée en recopiant la séquence de premières (respectivement deuxièmes) images vers une autre zone mémoire devant accueillir la première (respectivement deuxième) séquence d'images.

Selon une autre mise en œuvre possible, le circuit de calcul applique une (ou plusieurs) transformation(s) à la séquence de premières (respectivement deuxièmes) images afin d'obtenir la première (respectivement deuxième) séquence d'images.

Par exemple, selon une mise en œuvre possible, le premier capteur échantillonne la séquence de premières images à une fréquence différente (par exemple plus rapide) de celle à laquelle le deuxième capteur échantillonne la séquence de deuxièmes images (par exemple 100Hz pour le premier capteur et 50Hz pour le deuxième capteur, mais bien sûr le raisonnement est le même dans la situation où c'est le deuxième capteur qui est plus rapide que le premier). Une mise en œuvre possible consiste alors à extraire en tant que première séquence d'images un sous échantillonnage de la séquence de premières images prises à la fréquence la plus élevée (par exemple, dans le cas précité d'échantillonnages à 50Hz et 100Hz, à ne considérer qu'une image sur deux des images prises à 100Hz). Bien entendu, des algorithmes plus élaborés sont possibles. Par exemple, selon une mise en œuvre possible, un circuit électronique calcule une moyenne de deux images consécutives à 100Hz (de la séquence de premières images) et la définit comme l'image correspondante (à 50Hz) de la première séquence d'images, qu'il associe à une image respective (à 50Hz également) de la deuxième séquence d'images. A l'inverse, selon une mise en œuvre possible du procédé, un circuit de calcul effectue une interpolation des images de la séquence de fréquence d'échantillonnage la plus faible (séquence de deuxièmes images dans l'exemple ci-dessus) pour s'aligner sur l'autre séquence d'images (de fréquence supérieure) et construit ainsi une deuxième séquence d'image de fréquence double par rapport à la séquence de deuxièmes images (ceci n'est qu'un exemple possible).

De même, selon une mise en œuvre alternative, la résolution des premières images est différente de celle des deuxième images, et un circuit effectue une interpolation des images de résolution la plus faible, ou un sous échantillonnage (ou un moyennage local) des images de résolution la plus forte. Une interpolation simplifiée à l'extrême consiste à dupliquer l'information, par exemple si chaque pixel d'une image d'une des deux séquences (de premières et deuxièmes images) correspond à quatre pixels de l'image correspondante de l'autre séquence (en raison d'une résolution quadruple de cette autre séquence), une interpolation peut consister à remplacer chaque pixel de l'image de basse résolution par un bloc de quatre pixels identiques au pixel initial (de l'image de basse résolution). Ainsi, si la séquence de deuxièmes images contient des images de résolution 2000*2000 pixels alors que la séquence de premières images contient des images dont la résolution n'est que de 1000*1000 pixels, la deuxième séquence d'images peut être égale à la séquence de deuxièmes images, et la première séquence d'images peut être une séquence dont les images de résolution 2000*2000 pixels ont pour valeur de pixels de coordonnées (2x, 2y), (2x+1, 2y), (2x, 2y+1) et (2x+1, 2y+1) la valeur du pixel de coordonnées (x,y) dans l'image correspondante de la séquence de premières images.

Selon une mise en œuvre possible, la résolution et la fréquence d'échantillonnage des séquences de premières et deuxièmes images diffèrent toutes deux, et le procédé combine des solutions des deux paragraphes précédents pour générer une première ou une deuxième séquence d'images (l'autre séquence pouvant le cas échéant être passée par pointeur, comme exposé précédemment, si elle n'est pas modifiée). Bien entendu, il se peut que la première et la deuxième séquence d'images soient toutes deux générées sans que l'une des deux ne soit simplement copiées ou passées par référence (par exemple en cas de fréquence d'échantillonnage plus élevée d'une des deux séquences et de résolution plus élevée de l'autre séquence, s'il est souhaité de s'aligner soit sur les performances les plus hautes, soit sur les plus basses).

Il ressort des trois paragraphes précédents qu'il est toujours possible que les première et deuxième séquences d'images contiennent des images de résolution identique, échantillonnées à la même fréquence (soit en raison du mode opératoire des capteurs eux-mêmes, soit en raison d'un traitement opéré ultérieurement). Chaque couple d'élément et de secteur associé de la deuxième image correspond alors à un couple respectif d'élément et de secteur associé de la première image correspondante (pour autant que les éléments et secteurs soient définis de la même manière pour la première et la deuxième séquence d'images). D'autres problématiques d'harmonisation d'images peuvent se poser. Elles ne sont a priori pas de nature à remettre en cause l'assertion selon laquelle il est possible d'obtenir des première et deuxième séquences d'images contenant des images de résolution identique, échantillonnées à la même fréquence. Ces problématiques d'harmonisation se règlent de manière conventionnelle, par exemple à l'aide (notamment) de transformations géométriques de recalage d'une image sur l'autre. Il peut s'agir d'une translation globale, d'une correction de distorsion de focale, etc.

L'obtention des première et deuxième séquences d'images peut également (ou alternativement) comprendre d'autres types de traitements (tels que la prise en compte d'une moyenne locale d'un secteur, soustraite à l'élément correspondant à ce secteur), comme il sera exposé ci-après. Ainsi, bien que l'obtention des première et deuxième séquences d'images puisse avoir pour objet d'obtenir deux séquences (première et deuxième séquences) de fréquences identiques et dont les images ont la même résolution à partir de deux séquences (séquences de premières et de deuxièmes images) dont les fréquences et/ou les résolutions d'images sont différentes, selon certaines mises en œuvre les première et deuxième séquences d'images ont des fréquences et/ou des résolutions d'images différentes.

L'obtention des première et deuxième séquences d'images peut également (ou alternativement) comprendre d'autres types de traitements tels que des ajustements de contraste et/ou de luminosité, ou encore une réduction de différence résiduelle de champ de vision (parallaxe etc.) entre les deux capteurs afin d'aligner (par traitement numérique) la première séquence d'images et la deuxième séquence d'images plus précisément que ne sont alignées la séquence de premières images et la séquence de deuxièmes images. En particulier, selon une mise en œuvre possible, l'obtention de la première séquence d'images dépend non seulement de la séquence de premières images mais également de la séquence de deuxièmes images, et/ou de même l'obtention de la deuxième séquence d'images dépend non seulement de la séquence de deuxièmes images mais également de la séquence de premières images. Bien sûr, selon une mise en œuvre possible, l'obtention de la première séquence d'images peut ne dépendre que de la séquence de premières images et pas de la séquence de deuxièmes images, et/ou de même l'obtention de la deuxième séquence d'images peut ne dépendre que de la séquence de deuxièmes images et pas de la séquence de premières images.

Le cas échéant, le procédé comprend une obtention, par un circuit de calcul, d'une troisième séquence d'images issue de la séquence de troisièmes images C(x,y,t) et éventuellement de séquences supplémentaires (quatrième, cinquième, etc.) d'images issue de la séquence d'images supplémentaires, selon des modalités similaires à celles décrites ci-dessus.

Selon une mise en œuvre possible du premier mode de réalisation, le procédé comprend une obtention, par un circuit de calcul, pour chaque secteur de chacune des images des première et deuxième séquences d'images (et le cas échéant, également pour chaque secteur de chacune des images de la troisième séquence d'images et des séquences supplémentaires d'images) d'une variance spatiale dudit secteur.

Le circuit de calcul peut mutualiser des ressources (par exemple le processeur) avec le calcul précité, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en œuvre cette obtention de variance spatiale lorsqu'il est exécuté par le processeur.

La variance spatiale est une grandeur représentative de l'ampleur des variations des valeurs des éléments (par exemple des pixels) dans le secteur concerné.

La variance spatiale du secteur peut être calculée à partir d'une variance mathématique des pixels composant le secteur. Les pixels prenant les valeurs a(x,y,t) (x et y variant dans des intervalles définissant un secteur donné de l'image de l'instant t de la première séquence d'images), la variance est alors $VA(x,y,t) = E((a(x,y,t)-E(a(x,y,t)))^2)$ où E désigne l'espérance mathématique, calculée pour toutes les valeurs x et y du secteur donné (à l'instant t). De même, pour la deuxième séquence d'images, $VB(x,y,t) = E((b(x,y,t)-E(b(x,y,t)))^2)$, et la formule est la même pour les autres séquences d'images éventuelles.

Selon une mise en œuvre possible, la variance spatiale est alors définie en fonction du bruit des capteurs de la manière suivante. On note sa l'écart type du bruit (supposé blanc gaussien) du premier capteur, et sb l'écart type du bruit (supposé blanc gaussien) du deuxième capteur (on pourrait de même définir des notations pour le troisième capteur éventuel et pour les capteurs supplémentaires). Ces bruits sont des caractéristiques des capteurs. Généralement, ces caractéristiques sont stables (ce qui varie, c'est le rapport signal sur bruit, davantage que le bruit lui-même). On définit la variance spatiale $VAr(x,y,t) = 1+VA(x,y,t)/(sa^2)$ pour la première séquence d'images et $VBr(x,y,t) = 1+VB(x,y,t)/(sb^2)$ pour la deuxième séquence d'images (de même pour les autres séquences éventuelles). Par exemple, si un secteur n de la deuxième séquence d'images est compris entre x=xn et x=xn+dxn et entre y=yn et y=yn+dyn, alors la variance spatiale de ce secteur n est égale à $1+E((b(x,y,t)-E(b(x,y,t)))^2)/(sb^2)$, les espérances étant calculées pour x variant de xn à xn+dxn et pour y variant de yn à yn+dyn.

Selon d'autres mises en œuvre, la variance spatiale est calculée différemment. En effet, tout indicateur susceptible de refléter le fait que les éléments varient beaucoup ou au contraire varient peu peut être utile. Un objet d'un tel indicateur (la variance spatiale) est de faire ressortir les secteurs de « bonne qualité » (présentant de fortes variations spatiale) afin de leur donner plus de poids que les secteurs correspondants des autres séquences d'images, si ces secteurs correspondants (c'est-à-dire correspondant à une même partie de la scène) ont une moins bonne qualité. Un secteur de moins bonne qualité présente généralement moins de variations spatiales, laissant supposer que le capteur concerné n'a pas été en mesure de discerner les détails du secteur avec autant d'acuité que l'autre capteur (qui identifie des variations plus fortes pour un secteur correspondant).

Selon le premier mode de réalisation, le procédé comprend une obtention, par un circuit de calcul, pour chaque secteur de chacune des images des première et deuxième séquences d'images (et éventuellement des troisièmes séquences voire des séquences supplémentaires) d'une pondération associée (à ce secteur). Cette pondération vise à refléter le niveau de signal sur bruit dans ce secteur. Selon une mise en œuvre possible, cette pondération est en fonction d'une variance spatiale calculée pour ce secteur (par exemple selon la mise en œuvre envisagée précédemment). La pondération associée au secteur peut également être fonction de la variance spatiale (respectivement des variances spatiales) du secteur (respectivement des secteurs) correspondant de l'image de l'autre (respectivement des autres) séquence(s). Selon une mise en œuvre possible, la pondération associée au secteur est une fonction croissante de la variance spatiale du secteur.

Dans l'hypothèse où il n'y a que deux séquences d'images, une pondération possible est, pour un secteur d'une image de la première séquence d'images, $Pond(a(x,y,t)) = VAr(x,y,t)/((VAr(x,y,t)+VBr(x,y,t))$, et pour le secteur correspondant de l'image correspondante de la deuxième séquence d'images, $Pond(b(x,y,t)) = VBr(x,y,t)/(VAr(x,y,t)+VBr(x,y,t))$.

Dans l'hypothèse où, disposant de n capteurs de types différents, le procédé utilise n séquences d'images issues des n capteurs (étant entendu qu'il n'est pas obligatoire d'utiliser les séquences d'images issues de tous les capteurs disponibles), le procédé utilise (selon une mise en œuvre possible) pour le calcul des pondérations une formule similaire dans laquelle le dénominateur comprend la somme de toutes les variances spatiales pour le secteur considéré (c'est-à-dire les variances spatiales calculées pour le secteur tel qu'il a été capté par chacun des n capteurs). Par exemple, pour trois capteurs, on peut définir pour un secteur de la deuxième séquence : $Pond(b(x,y,t)) = VBr(x,y,t)/(VAr(x,y,t)+VBr(x,y,t)+VCr(x,y,t))$. Ce mode de calcul présente l'avantage de normaliser la mesure de qualité pour chaque secteur.

De façon plus générale, toute formule faisant apparaître une variance spatiale relative du secteur considéré par rapport aux variances spatiales de tous les capteurs peut être utilisée. Un objet de cette pondération est de faire ressortir le secteur dont la variance spatiale est la plus importante, et donc qui permet a priori la détection de mouvement la plus performante.

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en oeuvre cette obtention de pondération lorsqu'il est exécuté par le processeur.

Selon le premier mode de réalisation, le procédé comprend une obtention, par un circuit de calcul, d'une première séquence pondérée d'images. Chaque élément de chaque image (de la première séquence pondérée d'images) est égal à l'élément correspondant (c'est-à-dire de même emplacement spatiotemporel) de la première séquence d'images, pondéré par la pondération associée au secteur (de la première séquence d'images) associé audit élément correspondant (de la première séquence d'images). Par exemple, chaque élément $ap(x,y,t)$ de chaque image de la première séquence pondérée d'images est égal au produit de l'élément correspondant $a(x,y,t)$ de la première séquence d'images par la pondération $p(x,y,t)$ associée au secteur correspondant audit élément de la première séquence d'images ($ap(x, y,t) = a(x,y,t)*p(x,y,t)$). Ainsi, selon une mise en œuvre possible, la première séquence pondérée d'images est égale à la première séquence d'images dans laquelle chaque élément (par exemple chaque pixel) de chaque image est remplacé par ce même élément (entendu par exemple comme la valeur numérique du pixel représentant ce pixel dans l'image, lorsque cet élément est un pixel) multiplié par la pondération calculée pour le secteur associé à cet élément.

Le procédé comprend également une obtention, par le circuit de calcul, d'une deuxième séquence pondérée d'images. Chaque élément de chaque image (de la deuxième séquence pondérée d'images) est égal à l'élément correspondant (c'est-à-dire de même emplacement spatiotemporel) de la deuxième séquence d'images, pondéré par la pondération associée au secteur (de la deuxième séquence d'images) associé audit élément correspondant (de la deuxième séquence d'images), par exemple selon une mise en oeuvre du paragraphe précédent transposée à la deuxième séquence d'images.

Le cas échéant, le procédé comprend également une obtention, par le circuit de calcul, d'au plus autant de séquences pondérées d'images qu'il y a de capteurs différents (étant entendu que la présence de plus de deux capteurs n'impose pas de calculer ces séquences pondérées pour tous les capteurs, mais n'est qu'une option).

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en œuvre cette obtention de séquences pondérées lorsqu'il est exécuté par le processeur.

Selon le premier mode de réalisation, le procédé comprend une obtention, par un circuit de calcul, d'une séquence d'images de variance améliorées $I(x,y,t)$ résultant d'une combinaison de séquences d'images comprenant la première séquence pondérée d'images et la deuxième séquence pondérée d'images. Cette combinaison peut être une combinaison linéaire, par exemple une simple somme des séquences pondérées d'images, c'est-à-dire une séquence d'images donc chaque élément de chaque image est égal à la somme des éléments correspondants des images correspondantes des séquences pondérées à combiner. Selon une mise en œuvre possible, le procédé combine plus de deux séquences pondérées (il peut combiner autant de séquences pondérées qu'il y a de capteurs de types différents deux à deux, pour autant qu'une séquence pondérée ait été calculée pour chacun de ces capteurs). Mais selon une mise en œuvre possible, le procédé ne combine qu'une première et une deuxième séquences pondérées (indépendamment du nombre de capteurs).

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en œuvre cette obtention de séquence d'images de variances améliorées lorsqu'il est exécuté par le processeur.

Selon le premier mode de réalisation, le procédé comprend une obtention, par un circuit de calcul, d'une estimation de mouvement sur la base de la séquence d'images améliorées $I(x,y,t)$ obtenue. Cette estimation de mouvement peut être par exemple une estimation de mouvement global, une estimation de mouvement dense, ou une combinaison d'estimation de mouvement global et d'estimation de mouvement dense, telle que décrites dans la demande de brevet français FR1050014 du même déposant. Selon une mise en œuvre possible, cette estimation de mouvement est assistée par des informations externes à celles obtenues par les capteurs, telles que des mesures GPS et/ou des mesures gyroscopiques et/ou des mesures d'accéléromètres.

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en œuvre cette obtention d'estimation de mouvement lorsqu'il est exécuté par le processeur.

Selon le premier mode de réalisation, le procédé comprend une obtention, par un circuit de calcul, en fonction de l'estimation de mouvement obtenue, d'un alignement spatial des images d'une séquence d'images à afficher issue de séquences d'images correspondant à la scène donnée et comprenant la séquence de premières images A(x,y,t) et la séquence de deuxièmes images B(x,y,t).

Les séquences d'images correspondant à la scène donnée peuvent comprendre des séquences d'images autres que la séquence de premières images A(x,y,t) et la séquence de deuxièmes images B(x,y,t), et peuvent notamment comprendre la première séquence d'images a(x,y,t), la deuxième séquence d'images b(x,y,t), ou encore une séquence d'images issue d'un traitement de l'une de ces quatre séquences d'images. Il peut également s'agir de séquences d'images issues de capteurs autres que les premier et deuxième capteurs (par exemple un troisième capteur, ou un autre capteur supplémentaire), éventuellement traitées. Les caractéristiques d'une séquence d'images à afficher ne sont pas nécessairement optimisées de la même façon qu'un autre type de séquence d'images. Par exemple, la séquence d'images de variances améliorées peut être déterminée de manière à maximiser les variances spatiales des secteurs d'une scène captée par plusieurs capteurs et à faciliter une détection de mouvement par un algorithme approprié, mais cette séquence d'images n'est pas nécessairement facile à appréhender pour un utilisateur humain à destination duquel elle serait affichée. Il convient de noter que la séquence d'images à afficher peut faire l'objet, avant affichage mais après débruitage, d'autres traitements (par exemple une incrustation d'informations supplémentaires telles que la date, l'heure, les coordonnées GPS, la température extérieure, ou encore des informations contextuelles de réalité augmentée etc.).

L'alignement spatial des images d'une séquence d'images à afficher peut consister à calculer, pour chaque image de la séquence, un vecteur indiquant le mouvement global de l'image par rapport à l'image précédente. Un vecteur (X,Y) peut ainsi indiquer le décalage horizontal X et le décalage vertical Y à appliquer à une image pour que la scène que cette image représente coïncide avec la même scène telle qu'elle a été capturée dans une image de référence telle que l'image précédente. En appliquant la translation (X,Y) à cette image, il est alors possible de superposer les deux images (du moins leurs parties communes). Par exemple, pour deux images de 1000*1000 pixels dont la deuxième doit être considérée comme étant décalée de 23 pixels à gauche et de 17 pixels vers le haut pour refléter le mouvement, le procédé peut alors superposer les pixels $(x_i,y_i)$ de la première image avec les pixels $(x_i+23,y_i+17)$ de la deuxième image, $x_i$ variant de 0 à 976 et $y_i$ variant de 0 à 982 (la zone d'intersection mesurant 977*983 pixels). Selon une mise en œuvre possible, l'alignement est calculé de façon glissante sur plus de deux images (par exemple sur dix images, mais bien sûr d'autres valeurs sont possibles), ou plus précisément sur la zone d'intersection de ces dix (ou n pour tout entier n approprié) images à aligner. Dans ce cas, selon une mise en œuvre possible, chaque image de la séquence est associée à neuf (ou dans le cas général n-1) alignements possibles (selon la position que l'image est susceptible d'occuper dans la séquence d'images à aligner). Selon une mise en œuvre alternative, seul l'alignement d'une image par rapport à une image adjacente (par exemple l'image précédente) est enregistré, le procédé recalculant (le cas échéant) l'alignement d'une image par rapport à une image qui ne lui est pas immédiatement adjacente par composition des alignements relatifs de toutes les images intermédiaires.

Une simple translation dans le plan de l'image peut être suffisante, par exemple pour des capteurs embarqués dans un véhicule qui se déplace en translation sur un plan sensiblement horizontal (par exemple une route, une surface d'eau, ou un terrain) et qui observe une scène relativement éloignée des capteurs. Mais une simple translation ne permet pas nécessairement en toute circonstance de refléter le mouvement mesuré et ne permet donc pas nécessairement un alignement correct (par exemple dans le cas d'une rotation le long d'un axe perpendiculaire au plan de l'image). Selon d'autres mises en œuvre, le circuit de calcul détermine donc une rotation dans le plan de l'image (en déterminant par exemple un point constituant un centre de rotation et un angle de rotation). Comme précédemment, chaque image peut être associée à un enregistrement des caractéristiques (point central et angle) d'une rotation à appliquer à cette image pour l'aligner à une image de référence telle que l'image précédente, ou à autant d'enregistrements que d'images que l'on envisage d'aligner avec l'image considérée.

Il convient de distinguer le mouvement lié au déplacement du dispositif optronique au cours de temps et le « mouvement » d'harmonisation d'un capteur avec l'autre. L'alignement spatial peut ainsi comprendre une harmonisation statique (c'est-à-dire ne variant pas au cours du temps) d'un capteur avec l'autre. L'harmonisation statique comprend par exemple une rotation permettant d'harmoniser un capteur avec l'autre (la rotation dépendant des capteurs et de leur positionnement relatif et ne variant pas au cours du temps si le positionnement relatif des capteurs est fixe). Une harmonisation statique peut de même comprendre une correction de distorsion (constante) ou encore une translation (fixe) à appliquer pour « loucher » correctement à une distance donnée. Selon une mise en œuvre possible, l'harmonisation statique est déterminée une fois pour toutes en usine.

Les deux modes de réalisation précédents peuvent être combinés, et ainsi l'alignement à opérer entre deux images consécutives peut être représenté par une composition d'une translation et d'une rotation, tous deux dans le plan de l'image.

Les transformations bidimensionnelles précitées peuvent constituer une excellente approximation mais ne sont pas toujours suffisantes pour effectuer un alignement quasi parfait entre deux images (ou plus). Selon d'autres modes de réalisation le circuit affiner l'alignement et peut ainsi également prendre en compte un mouvement autre qu'un mouvement dans le plan de l'image. Avec un tel mouvement l'image considérée de la séquence d'images à afficher est alors alignée non pas seulement par un simple déplacement de l'image (qui resterait identique au déplacement près), mais par déformation de l'image reflétant le mouvement mesuré. Par « déformation » on entend que l'image « déformée » n'est plus superposable avec l'image d'origine, quelles que soient les rotations et/ou translations appliquées dans le plan de l'image pour tenter d'opérer cette superposition. Un tel mouvement peut être par exemple une translation correspondant à un rapprochement ou à un éloignement des capteurs par rapport à la scène selon un axe perpendiculaire au plan de l'image. L'alignement peut alors comprendre l'application d'un facteur de zoom (avant ou arrière), chaque image étant associée à un facteur de zoom à appliquer par rapport à au moins une image de référence (par exemple l'image précédente). Enfin, un tel mouvement peut également comprendre des rotations le long d'axes non perpendiculaires au plan de l'image (par exemple selon un axe horizontal de l'image et selon un axe vertical de l'image). De telles rotations peuvent être simulées par traitement d'image. Une telle rotation (le long d'un axe non perpendiculaire à l'axe de l'image) peut résulter d'une rotation des capteurs par rapport à la scène, rotation qui peut être consécutive à une rotation de leur support (par exemple un véhicule circulant dans un terrain très accidenté ou un navire sur une mer forte), une telle rotation pouvant être mesurée par exemple par des gyroscopes solidaires des capteurs afin de faciliter son estimation. L'alignement comprend alors (en plus éventuellement des autres paramètres d'alignement déjà évoqués) des paramètres de rotations tridimensionnelles éventuelles (impliquant une déformation de l'image).

Selon une mise en œuvre possible, la partie de la scène qu'un utilisateur humain du procédé souhaite observer correspond au centre des images (ou exprimé différemment, l'utilisateur humain centre les capteurs sur la partie de la scène qui l'intéresse), et cette partie de la scène est éloignée des capteurs (c'est-à-dire que la vitesse de déplacement des capteurs par rapport à la scène n'est pas susceptible de modifier de manière notable la distance des capteurs à la scène sur une échelle de temps courte, par exemple de l'ordre d'une dizaine d'images consécutives). Les déplacements s'opérant ailleurs que dans le plan de l'image peuvent alors être assimilés à des translations dans le plan de l'image (en ce qui concerne les deux rotations tridimensionnelles envisagées) ou être négligés (en ce qui concerne le rapprochement ou l'éloignement de la scène le long d'un axe perpendiculaire), du moins en ce qui concerne le centre des images (qui selon cette mise en œuvre représente la partie la plus pertinente).

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en œuvre cette obtention d'alignement spatial (des images d'une séquence d'images à afficher) lorsqu'il est exécuté par le processeur.

Selon le premier mode de réalisation, le procédé comprend un débruitage temporel, par un circuit de calcul, en fonction de l'alignement spatial déterminé, de la séquence d'images à afficher.

Par exemple, si l'alignement consiste en une translation $(X,Y)$ à appliquer à une première image par rapport à une autre image adjacente dans la séquence d'images à afficher, il est alors possible de superposer les deux images sur l'intersection de ces deux images par un simple jeu d'index (sans avoir à effectuer de traitement d'image) et d'effectuer un débruitage (par exemple une moyenne) en générant beaucoup moins de flou (idéalement, en ne générant aucun flou si la scène est stationnaire, le mouvement étant par exemple issu du mouvement du/des capteur(s)). Ainsi, dans l'exemple précité dans lequel deux images de 1000*1000 pixels sont telles que la deuxième doit être considérée comme étant décalée de 23 pixels à gauche et de 17 pixels vers le haut pour refléter le mouvement, le procédé peut calculer la moyenne des pixels $(x_i, y_i)$ de la première image avec les pixels $(x_i+23, y_i+17)$ de la deuxième image, $x_i$ variant de 0 à 976 et $y_i$ variant de 0 à 982 (la zone d'intersection mesurant 977*983 pixels). Cette moyenne permet de réduire le bruit sur ces pixels. Il s'agit évidemment là d'un exemple simpliste à des fins d'illustration, la moyenne étant plutôt calculée sur un plus grand nombre d'éléments (par exemple de pixels) alignés les uns avec les autres, et la simple moyenne (par exemple la moyenne arithmétique) pouvant être remplacée par un algorithme de débruitage plus élaboré. Les techniques de débruitage temporel possibles comprennent notamment des techniques linéaires de filtrage passe-bas (moyenne temporelle, filtres linéaires, ...), la moyenne temporelle robuste (par exemple utilisation de M-estimateurs), et également des techniques non-linéaires telles que la médiane temporelle ou les méthodes parcimonieuses (filtrage de coefficients d'ondelettes, ...).

Le circuit de calcul peut mutualiser des ressources (par exemple le processeur) avec un ou plusieurs des circuits de calcul précités, ou être un circuit de calcul complètement séparé. Le circuit de calcul peut être notamment un circuit électronique de type FPGA, ASIC, PAL, etc.. Le circuit de calcul peut également être un ensemble comprenant un processeur et une mémoire (par exemple RAM, ROM, EEPROM, Flash, mémoire optique, mémoire magnétique, etc.), la mémoire comprenant un programme d'ordinateur agencé pour mettre en oeuvre ce débruitage temporel lorsqu'il est exécuté par le processeur.

Selon un deuxième mode de réalisation, un procédé de débruitage temporel d'une séquence d'images selon le premier mode de réalisation comprend une sélection, par un circuit de sélection, en tant que séquence d'images à afficher qui est débruitée à l'étape /j/, de l'une parmi la séquence de premières images $A(x,y,t)$ et la séquence de deuxièmes images B(x,y,t).

Ainsi, selon une mise en œuvre possible, le procédé détecte une pression sur un bouton qui permet à un utilisateur humain de basculer entre la séquence de premières images (par exemples des images prises avec un capteur dans le spectre visible par l'homme) et la séquence de deuxièmes images (par exemple des images prises dans le spectre infrarouge).

Selon une mise en œuvre possible, le procédé sélectionne automatiquement la séquence d'images à afficher (par exemple une séquence d'images infrarouge s'il fait nuit et une séquence d'images couleur s'il fait jour).

Selon une mise en œuvre possible, le procédé effectue la sélection en fonction d'informations de configuration ou encore d'informations de sélection reçues par exemple via un réseau de télécommunications.

Selon un troisième mode de réalisation, un procédé de débruitage temporel selon le premier ou deuxième mode de réalisation comprend, aux fins de l'obtention, par un circuit de calcul, d'une première séquence d'images a(x, y,t) issue de la séquence de premières images A(x,y,t) et de l'obtention, par le circuit de calcul, d'une deuxième séquence d'images b(x,y,t) issue de la séquence de deuxièmes images B(x,y,t), les étapes suivantes.

Ce procédé comprend une obtention, par le circuit de calcul, pour chaque secteur de chacune des images de la séquence de premières images A(x,y,t) et de la séquence de deuxièmes images B(x,y,t), d'une moyenne locale dudit secteur. Cette moyenne locale est par exemple une moyenne arithmétique telle que de rapport de la somme des valeurs des pixels du secteur par le nombre de pixels du secteur. Mais d'autres moyennes sont possibles (moyenne géométrique, etc.).

L'obtention de la première séquence d'images a(x,y,t) comprend la soustraction (par le circuit de calcul) à chaque élément de chaque image de la séquence des premières images A(x,y,t) de la moyenne locale du secteur correspondant audit élément, et l'obtention de la deuxième séquence d'images b(x,y,t) comprend la soustraction (par le circuit de calcul) à chaque élément de chaque image de la séquence des deuxièmes images B(x,y,t) de la moyenne locale du secteur correspondant audit élément.

Ainsi, les variations des valeurs des pixels des secteurs sont accrues de manière relatives (puisqu'elles sont centrées sur l'origine au lieu d'être centrées sur une valeur qui peut être grande devant ces variations).

Ceci pourrait complètement fausser la perception de l'image par un œil humain, mais permet (pour un circuit de calcul, qui est un composant électronique), de faire ressortir les variations et d'identifier celui des deux capteurs qui fournit pour le secteur considéré des informations permettant la meilleure estimation de mouvement.

Bien entendu, d'autres traitements sont possibles en plus de la soustraction de la moyenne locale, ainsi que cela a été précédemment décrit. Après avoir soustrait la moyenne locale il est ainsi possible, par exemple, de sous échantillonner la première séquence d'images a(x,y,t) si elle a une résolution plus faible que celle de la deuxième séquence d'images b(x,y,t), etc.

Selon un quatrième mode de réalisation, un procédé de débruitage temporel selon l'un des premier au troisième modes de réalisation s'appuie sur un premier capteur et un deuxième capteur non harmonisés spatialement.

Le procédé de débruitage temporel comprend, aux fins de l'obtention, par un circuit de calcul, d'une première séquence d'images a(x,y,t) issue de la séquence de premières images A(x,y,t) et de l'obtention, par le circuit de calcul, d'une deuxième séquence d'images b(x,y,t) issue de la séquence de deuxièmes images B(x,y,t), les étapes suivantes.

Le procédé comprend une obtention, par un circuit de calcul, d'une première séquence d'images a(x,y,t) issue d'un pré-lissage de la séquence de premières images A(x,y,t) et d'une deuxième séquence d'images b(x,y,t) issue d'un pré-lissage de la séquence de deuxièmes images (B(x,y,t)).

Ainsi, grâce à ce quatrième mode de réalisation, le procédé fonctionne même en présence de parallaxe non corrigée entre les deux capteurs, à condition néanmoins que le décalage entre les images des deux capteurs soit petit devant le flou introduit.

Plus précisément, dans le cas d'un système bicapteur hétérogène (deux capteurs de types différents), en particulier un système bicapteur hétérogène utilisant des optiques distinctes pour chaque capteur, l'harmonisation précise des deux capteurs (c'est-à-dire le fait que pour un triplet $\{x_0,y_0,t_0\}$ quelconque donné, le point $A(x_0,y_0,t_0)$ et le point $B(x_0, y_0,t_0)$ correspondent au même point de la scène imagé au même moment sur les deux capteurs) peut s'avérer très complexe, voire (dans certains cas) ne pas être réalisable. En effet, si la scène projetée sur les imageurs possède plusieurs profondeurs, le vecteur d'harmonisation spatiale entre les deux capteurs est dense et doit être estimé par des techniques complexes : estimation de mouvement dense hétérogène, recalage sur modèle numérique de terrain, utilisation d'imagerie active, etc.

Dans l'hypothèse d'une harmonisation spatiale imprécise, le calcul de I(x,y,t) à partir de A(x,y,t) et B(x,y,t) décrit précédemment est imprécis spatialement puisque les points de A(x,y,t) et B(x,y,t) ne coïncident pas exactement. En revanche, en appliquant un pré-lissage spatial aux images A(x,y,t) et B(x,y,t), et en choisissant une échelle spatiale de lissage telle que l'erreur d'harmonisation maximale attendue soit négligeable devant cette échelle, le procédé obtient une image I(x,y,t) contenant une information fiable au grain spatial du pré-lissage près.

Dans ces conditions, le procédé utilise, par exemple, une technique de mesure de mouvement différentielle (sur I(x,y,t)), une telle technique étant basée sur une équation de contrainte du mouvement apparent, et nécessitant justement (selon une mise en œuvre possible) un pré-lissage d'image permettant de rendre les variations d'intensité lumineuse lentes devant l'amplitude du mouvement à mesurer.

Selon le quatrième mode de réalisation, les imprécisions d'harmonisation deviennent complètement transparentes, et n'handicapent en rien la capacité à fusionner les informations des capteurs pour restaurer la vidéo.

Selon un cinquième mode de réalisation, un programme d'ordinateur comprend une suite d'instructions qui, lorsqu'elles sont exécutées par un processeur, conduisent le processeur à mettre en œuvre un procédé de débruitage temporel selon l'un des premier au quatrième modes de réalisation.

Le programme d'ordinateur peut être écrit dans tout langage de programmation approprié tel que des langages de très bas niveau (de type assembleur) ou en langage C, par exemple.

Selon un sixième mode de réalisation, un support de stockage non transitoire lisible par ordinateur, stocke un programme d'ordinateur selon le cinquième mode de réalisation. Ce support de stockage est par exemple une mémoire de type ROM, EEPROM, Flash, RAM sauvegardée par batterie, mémoire optique ou mémoire magnétique.

Un septième mode de réalisation se rapporte à un dispositif optronique pour débruitage temporel d'une séquence d'images.

Ce dispositif optronique peut être par exemple une paire de jumelles, ou encore un système de vision monté sur un véhicule, par exemple sur une tourelle de char.

Le dispositif optronique est agencé pour mettre en œuvre le procédé selon l'un des premier au quatrième modes de réalisation.

Toutes les mises en œuvre décrites en relation avec le procédé se transposent au dispositif (et réciproquement).

Selon une mise en œuvre possible, le dispositif optronique comprend un support de stockage selon le sixième mode de réalisation, qui, selon des mises en œuvres possible, est intégré à un circuit de calcul (soit sous forme de composants électroniques discrets, soit sur un même composant électronique, tel qu'un microcontrôleur ou un DSP). Selon une mise en œuvre possible, le dispositif optronique comprend des circuits de calcul implémentés sous une forme comprenant un unique processeur (éventuellement multicœur), une mémoire non volatile (par exemple ROM, EEPROM, Flash, RAM sauvegardée par batterie, mémoire optique ou mémoire magnétique) stockant un ensemble de programmes d'ordinateurs, adaptés chacun pour effectuer une tâche particulière (et correspondant chacun à un circuit de calcul respectif), et une mémoire de travail (par exemple de type RAM).

Le dispositif optronique comprend un premier capteur agencé pour capturer une séquence de premières images A(x,y,t) correspondant à une scène donnée, chaque première image étant divisée en éléments associés chacun à un secteur correspondant de ladite première image.

Le dispositif optronique comprend un deuxième capteur, de type différent du type du premier capteur, agencé pour capturer une séquence de deuxièmes images B(x,y,t) correspondant à ladite scène donnée, chaque deuxième image correspondant à une première image, chaque deuxième image étant divisée en éléments associés chacun à un secteur correspondant de ladite deuxième image, chaque couple d'élément et de secteur associé de la deuxième image correspondant à un couple d'élément et de secteur associé de la première image correspondante.

Le dispositif optronique comprend un circuit de calcul agencé pour obtenir une première séquence d'images a(x,y,t) issue de la séquence de premières images A(x,y,t) et une deuxième séquence d'images b(x,y,t) issue de la séquence de deuxièmes images B(x,y,t).

Le dispositif optronique comprend, selon une mise en œuvre possible, un circuit de calcul agencé pour obtenir, pour chaque secteur de chacune des images des première et deuxième séquences d'images, une variance spatiale dudit secteur.

Le dispositif optronique comprend un circuit de calcul agencé pour obtenir, pour chaque secteur de chacune des images des première et deuxième séquences d'images une pondération associée (le cas échéant en fonction de la variance spatiale obtenue pour ce secteur).

Le dispositif optronique comprend un circuit de calcul agencé pour obtenir une première séquence pondérée d'images, dont chaque élément de chaque image est égal à l'élément correspondant de la première séquence d'images pondéré par la pondération associée au secteur correspondant audit élément correspondant (de la première séquence d'images) et une deuxième séquence pondérée d'images, dont chaque élément de chaque image est égal à l'élément correspondant de la deuxième séquence d'images pondéré par la pondération associée au secteur correspondant audit élément correspondant (de la deuxième séquence d'images).

Le dispositif optronique comprend un circuit de calcul agencé pour obtenir une séquence d'images améliorées I(x,y,t) résultant d'une combinaison de séquences d'images comprenant la première séquence pondérée d'images et la deuxième séquence pondérée d'images.

Le dispositif optronique comprend un circuit de calcul agencé pour obtenir une estimation de mouvement sur la base de la séquence d'images améliorées I(x,y,t) obtenue.

Le dispositif optronique comprend un circuit de calcul agencé pour obtenir, en fonction de l'estimation de mouvement calculée, un alignement spatial des images d'une séquence d'images à afficher issue de séquences d'images correspondant à la scène donnée et comprenant la séquence de premières images A(x,y,t) et la séquence de deuxièmes images B(x,y,t).

Le dispositif optronique comprend un circuit de calcul agencé pour effectuer un débruitage temporel, en fonction de l'alignement spatial déterminé, de la séquence d'images à afficher.

Selon un huitième mode de réalisation, un dispositif optronique selon le septième mode de réalisation comprend un circuit de sélection agencé pour sélectionner, en tant que séquence d'images à afficher qui doit être débruitée, l'une parmi la séquence de premières images A(x,y,t) et la séquence de deuxièmes images B(x,y,t).

Selon un neuvième mode de réalisation, le circuit de calcul agencé pour obtenir les première et deuxième séquences d'images d'un dispositif optronique selon le septième ou huitième mode de réalisation est agencé pour calculer, pour chaque secteur de chacune des images de la séquence de premières images A(x,y,t) et de la séquence de deuxièmes images B(x,y,t), une moyenne locale dudit secteur, puis pour obtenir la première séquence d'images a(x,y,t) par soustraction à chaque élément de chaque image de la séquence des premières images A(x,y,t) de la moyenne locale du secteur correspondant audit élément, et pour obtenir la séquence de deuxièmes images b(x,y,t) par soustraction à chaque élément de chaque image de la séquence des deuxièmes images B(x,y,t) de la moyenne locale du secteur correspondant audit élément.

Selon un dixième mode de réalisation, le premier capteur et le deuxième capteur d'un dispositif optronique selon l'un des septième au neuvième modes de réalisation ne sont pas harmonisés spatialement. Le circuit de calcul agencé pour obtenir les première et deuxième séquences d'images est agencé pour obtenir une première séquence d'images a(x,y,t) issue d'un pré-lissage de la séquence de premières images A(x,y,t) et une deuxième séquence d'images b(x,y,t) issue d'un pré-lissage de la séquence de deuxièmes images B(x,y,t).

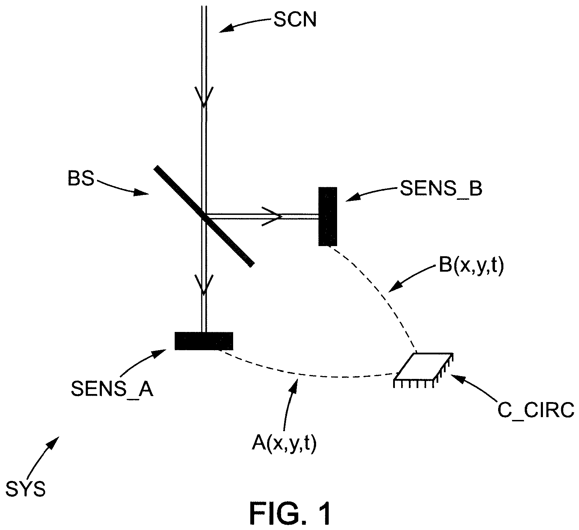

La figure 1 illustre un exemple de dispositif optronique selon un mode de réalisation possible de l'invention. Ce dispositif optronique est un système bicapteur SYS harmonisé spatialement et temporellement.

Le système bicapteur SYS comprend une optique unique (non représentée) à travers laquelle un signal SCN représentant la scène observée est reçu. Le signal SCN arrive sur un diviseur de faisceau BS (de l'anglais beam splitter) qui peut être un miroir semi réfléchissant, une lame séparatrice, ou tout autre matériel approprié (par exemple à base de prisme). Le diviseur de faisceau BS sépare le signal SCN en deux exemplaires identiques (à l'intensité lumineuse près), à destination d'un premier capteur SENS_A et d'un deuxième capteur SENS_B, qui obtiennent respectivement des informations A(x,y,t) et B(x,y,t) représentant des séquences d'images représentant le signal SCN. Les capteurs SENS_A et SENS_B transmettent (traits pointillés sur la figure 1) les informations A(x,y,t) et B(x,y,t) à un circuit de calcul C_CIRC.

Le circuit de calcul C_CIRC du système bicapteur SYS combine les informations contenues dans A(x,y,t) et B(x,y,t) (obtenues par les deux capteurs) afin de réaliser un débruitage de A(x,y,t) et/ou B(x,y,t). Les images des deux capteurs sont harmonisées spatialement et temporellement, c'est-à-dire qu'un point de A(x,y,t) et un point de B(x,y,t) correspondent au même point de la scène, imagé au même moment sur les deux capteurs. L'harmonisation spatiale résulte notamment de l'optique unique, et du réglage du positionnement relatif du diviseur de faisceau BS et des premier et deuxième capteurs SENS_A et SENS_B. L'harmonisation temporelle résulte par exemple de la synchronisation temporelle des capteurs SENS_A et SENS_B. Cette synchronisation temporelle (échantillonnages simultanés par les deux capteurs) peut être obtenue par exemple à l'aide d'une horloge unique commune aux deux capteurs, ou d'une synchronisation régulière des horloges respectives des deux capteurs, ou encore d'une qualité des deux horloges permettant de s'assurer que leur dérive relative est négligeable. L'harmonisation spatiale et temporelle des capteurs n'implique pas nécessairement des résolutions spatiales et temporelles identiques pour les deux capteurs. Mais selon une mise en œuvre possible ces résolutions spatiales (par exemple en DPI c'est-à-dire en nombre de pixels par pouce selon l'axe des x et selon l'axe des y) et temporelles (par exemple en Hz) sont identiques.

Le modèle de bruit des capteurs est connu. Les paramètres du modèle de bruit des deux capteurs sont soit connus, soit calculés à l'aide de techniques d'estimation maîtrisées par l'homme du métier. Plus précisément, dans l'exemple envisagé, les bruits sont supposés blancs gaussiens, et d'écart-types respectifs sa et sb pour les capteurs SENS_A et SENS_B.

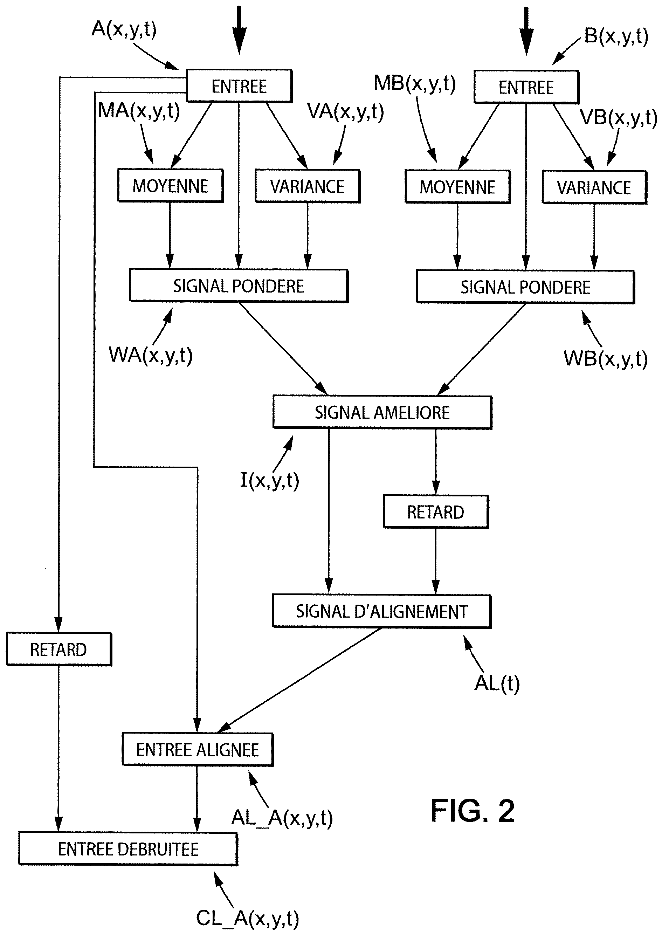

La figure 2 illustre différentes étapes mises en œuvre par le système bicapteur SYS précité.

Le système bicapteur SYS est agencé pour calculer une image I(x,y,t) appelée « l'image de meilleure information » correspondant à une image mélangeant l'information des deux voies (c'est-à-dire les informations A(x,y,t) et B(x,y,t) issues respectivement des capteurs SENS_A et SENS_B). Cette image est ensuite utilisée pour l'estimation de mouvement.

L'image I(x,y,t) prend la forme générale :

$$I(x,y,t)=Pond(A(x,y,t))*Transfo(A(x,y,t))+Pond(B(x,y,t))*Transfo(B(x,y,t))$$

Pond() est une fonction de pondération qui dépend de son argument, et Transfo() est une fonction de transformation des niveaux de gris de son argument. Si l'une des deux images A(x,y,t) ou B(x,y,t) (ou même les deux) n'est pas « monochrome » mais possède plusieurs canaux, comme par exemple une image couleur rouge-vert-bleu, alors cette image est ramenée à une image monochrome (c'est-à-dire monocanal). Par exemple, à chaque élément RVB (composé de trois pixels rouge, vert et bleu) de l'image couleur est associé un élément « noir et blanc » d'une image monochrome (déterminée pour l'occasion) en calculant, pour chaque élément de l'image couleur, la luminance correspondant à cet élément de l'image couleur, par exemple à partir d'une somme pondérée des trois canaux. Cette luminance représente alors l'élément correspondant de l'image monochrome (elle est par exemple encodée sur un octet afin de représenter 256 niveaux possibles de luminance).

L'exemple de calcul de I(x,y,t) ci-après consiste à calculer une image de meilleure variance spatiale locale représentative à partir des images A(x,y,t) et B(x,y,t).

Pour calculer I(x,y,t), le circuit de calcul C_CIRC du système bicapteur SYS commence par calculer les moyennes et variances spatiales locales de chacune des deux images. Ces dernières sont calculées de manière glissante sur tous les pixels. Le circuit de calcul C_CIRC obtient ainsi des images de moyennes et variances spatiales locales, notées MA(x,y,t) et MB(x,y,t) pour les moyennes, et VA(x,y,t) et VB(x,y,t) pour les variances. L'étendue spatiale du voisinage sur lequel sont calculées les moyennes et variances locales (taille de la fenêtre) est indexée sur l'étendue spatiale du traitement de mesure de mouvement qui est utilisé in fine. Les moyennes et variances locales peuvent être calculées de manière multi-échelle, si la technique de mesure de mouvement est elle même multi-échelle. Le cas mono-échelle est décrit ci-dessous.

Le circuit de calcul C_CIRC calcule ensuite des images normalisées NA(x,y,t) et NB(x,y,t) par :

$$NA(x,y,t) = A(x,y,t) - MA(x,y,t)$$

$$NB(x,y,t) = B(x,y,t) - MB(x,y,t)$$

Ces images normalisées ont une moyenne spatiale nulle.

Le circuit de calcul C_CIRC calcule ensuite les variances spatiales locales représentatives VAr(x,y,t) et VBr(x, y,t), qui relient l'activité dans les images au regard de leurs bruits respectifs :

$$VAr(x,y,t) = 1 + VA(x,y,t)/sa^2$$

$$VBr(x,y,t) = 1 + VB(x,y,t)/sb^2$$

Les images ainsi calculées (représentant les variances spatiales locales représentatives) tendent vers 1 lorsque la variance spatiale locale tend vers zéro. Inversement, ces images prennent des valeurs importantes lorsque l'activité locale des images est grande devant leur bruit.

Le circuit de calcul C_CIRC calcule enfin l'image de meilleure variance spatiale locale représentative I(x,y,t) par :

$$I(x,y,t) = WA(x,y,t) + WB(x,y,t)$$

Avec :

$$WA(x,y,t) = Pond(A(x,y,t)) * Transfo(A(x,y,t))$$

$$WB(x,y,t) = Pond(B(x,y,t)) * Transfo(B(x,y,t))$$

$$Pond(A(x,y,t)) = VAr(x,y,t) / (VAr(x,y,t) + VBr(x,y,t))$$

$$Pond(B(x,y,t)) = VBr(x,y,t) / (VAr(x,y,t) + VBr(x,y,t))$$

$$\text{Transfo}(A(x,y,t)) = NA(x,y,t)$$

$$\text{Transfo}(B(x,y,t)) = NB(x,y,t)$$

Cette image I(x,y,t) constitue une image fusionnée des images A(x,y,t) et B(x,y,t), avec localement une pondération plus forte pour l'image qui possède une variance locale forte vis-à-vis de son propre bruit. Notamment, si par exemple au point (x,y,t) la quantité VAr(x,y,t) est prépondérante par rapport à la quantité VBr(x,y,t), alors I(x,y,t) sera à peu près équivalente à (c'est-à-dire proche de) NA(x,y,t). Si les quantités VAr(x,y,t) et VBr(x,y,t) sont équivalentes (c'est-à-dire proches), alors les images NA(x,y,t) et NB(x,y,t) sont pondérées de manière équivalentes.

Le circuit de calcul C_CIRC utilise alors cette image I(x,y,t) dans la phase d'analyse du traitement de débruitage. Cette phase d'analyse comprend un alignement spatial des images à débruiter (il n'est pas ici question d'aligner spatialement deux images respectivement issues du premier capteur et du deuxième capteur, mais d'aligner spatialement des images consécutives issues d'un même capteur). Dans l'exemple de la figure 2, c'est l'image du premier capteur (représentée par A(x,y,t)) qui est débruitée. Pour pouvoir réaliser cet alignement spatial, le circuit de calcul C_CIRC effectue une mesure de mouvement apparent dans l'image. Il effectue cette mesure sur les images I(x,y,t), t variant dans une fenêtre appropriée. En effet, I(x,y,t) est de meilleure qualité que A(x,y,t) (ou du moins, dans le cas le plus défavorable, de qualité au moins aussi bonne). Le circuit de calcul C_CIRC obtient ainsi un signal d'alignement global AL(t) (selon une mise en œuvre plus complexe non représentée sur la figure 2, le signal d'alignement est dense et dépend des trois paramètres x, y et t au lieu de ne dépendre que du paramètre t). Cette obtention s'appuie sur un accès à l'image I(x,y,t-1), qui peut s'effectuer via une mémoire tampon (bloc RETARD sur la figure 2) mémorisant la dernière image I(x,y,t) qui à l'instant t suivant correspond à l'image I(x,y,t-1). Le signal d'alignement AL(t) indique le déplacement à effectuer sur l'image I(x,y,t) pour l'aligner sur l'image I(x,y,t-1) (et donc le déplacement à effectuer sur l'image A(x,y,t) pour l'aligner sur l'image A(x,y,t-1), qui est le même déplacement). Une fois cet alignement spatial effectué sur le signal A(x,y,t) le circuit de calcul C_CIRC obtient un signal AL_A(x,y,t), qui est un signal d'entrée A(x,y,t) aligné sur le signal d'entrée à l'instant précédent A(x,y,t-1). De manière alternative, le signal qui est aligné est le signal retardé A(x,y,t 1) (aligné sur A(x,y,t), au lieu d'aligner A(x,y,t) sur A(x,y,t 1)). Le circuit de calcul C_CIRC calcule alors un signal « propre » (débruité) CL_A(x,y,t) par régularisation de l'entrée alignée AL_A(x,y,t) et de l'entrée précédente A(x,y,t-1). Le mécanisme qui permet d'obtenir l'entrée précédente (bloc RETARD sur la figure 2) est par exemple une mémoire tampon. L'entrée non modifiée qui est utilisée comme paramètre d'entrée dans le calcul de CL_A(x,y,t) (en conjonction avec l'entrée alignée) est en effet une entrée retardée.

De façon générale, l'étape de régularisation temporelle se fait sur A(x,y,t) ou B(x,y,t) (pas obligatoirement sur A(x,y,t) comme illustré sur la figure 2), et peut opérer sur plus de deux images consécutives. La régularisation est orientée par le résultat de l'estimation de mouvement réalisée sur l'image I(x,y,t). Avec cette méthode, l'estimation de mouvement est ainsi réalisée de manière optimisée, en tirant partie de la meilleure combinaison des capteurs (par exemple sur la base d'informations spectrales différentes selon le capteur). Le procédé permet donc d'améliorer le débruitage sur l'image A(x,y,t) même si celle-ci a un très mauvais rapport signal à bruit, à condition de pouvoir compenser avec l'image B(x,y,t), et réciproquement.

La fonction de pondération des images A(x,y,t) et B(x,y,t) pour former l'image I(x,y,t) peut être également toute fonction de pondération permettant de générer une image fusionnée pertinente au sens du rapport signal à bruit local (et pas nécessairement la fonction de pondération décrite ci-dessus).

**Revendications**

1. Procédé de débruitage temporel d'une séquence d'images, ledit procédé comprenant :

    /a/ une capture, à l'aide d'un premier capteur (SENS_A), d'une séquence de premières images (A(x,y,t)) correspondant à une scène donnée (SCN), chaque première image étant divisée en éléments associés chacun à un secteur correspondant de ladite première image,
    /b/ une capture, à l'aide d'un deuxième capteur (SENS_B) d'une séquence de deuxièmes images (B(x,y,t)) correspondant à ladite scène donnée (SCN), le deuxième capteur opérant dans une bande spectrale différente du premier capteur ou ayant une sensibilité au moins dix fois supérieure à celle du premier capteur, chaque deuxième image correspondant à une première image, chaque deuxième image étant divisée en éléments associés chacun à un secteur correspondant de ladite deuxième image, chaque couple d'élément et de secteur associé de la deuxième image correspondant à un couple d'élément et de secteur associé de la première image correspondante,

/c/ une obtention, par un circuit de calcul (C_CIRC), d'une première séquence d'images issue de la séquence de premières images (A(x,y,t)) et d'une deuxième séquence d'images issue de la séquence de deuxièmes images (B(x,y,t)),

/d/ une obtention, par un circuit de calcul (C_CIRC), pour chaque secteur de chacune des images des première et deuxième séquences d'images d'une pondération associée, la pondération étant telle qu'elle permet de faire ressortir le secteur dont la variance spatiale est la plus importante,

/e/ une obtention, par un circuit de calcul (C_CIRC), d'une première séquence pondérée d'images, dont chaque élément de chaque image est égal à l'élément correspondant de la première séquence d'images pondéré par la pondération associée au secteur associé audit élément correspondant, et d'une deuxième séquence pondérée d'images, dont chaque élément de chaque image est égal à l'élément correspondant de la deuxième séquence d'images pondéré par la pondération associée au secteur associé audit élément correspondant,

/f/ une obtention, par un circuit de calcul (C_CIRC), d'une séquence d'images de variances améliorées (I(x,y,t)) résultant d'une combinaison de séquences d'images comprenant la première séquence pondérée d'images et la deuxième séquence pondérée d'images,

/g/ une obtention, par un circuit de calcul (C_CIRC), d'une estimation de mouvement sur la base de la séquence d'images améliorées (I(x,y,t)) obtenue,

/h/ une obtention, par un circuit de calcul (C_CIRC), en fonction de l'estimation de mouvement calculée, d'un alignement spatial des images d'une séquence d'images à afficher issue de séquences d'images correspondant à la scène donnée et comprenant la séquence de premières images (A(x,y,t)) et la séquence de deuxièmes images (B(x,y,t)),

/i/ un débruitage temporel, par un circuit de calcul (C_CIRC), en fonction de l'alignement spatial déterminé, de la séquence d'images à afficher.

2.  Procédé de débruitage temporel d'une séquence d'images selon la revendication 1, comprenant une sélection, par un circuit de sélection, en tant que séquence d'images à afficher qui est débruitée à l'étape /i/, de l'une parmi la séquence de premières images (A(x,y,t)) et la séquence de deuxièmes images (B(x,y,t)).

3.  Procédé de débruitage temporel d'une séquence d'images selon l'une des revendications précédentes, comprenant, à l'étape /c/ :

    /c1/ une obtention, par un circuit de calcul (C_CIRC), pour chaque secteur de chacune des images de la séquence de premières images (A(x,y,t)) et de la séquence de deuxièmes images (B(x,y,t)), d'une moyenne locale dudit secteur, et

    /c2/ une obtention, par un circuit de calcul (C_CIRC), de la première séquence d'images comprenant la soustraction, à chaque élément de chaque image de la séquence des premières images (A(x,y,t)), de la moyenne locale du secteur correspondant audit élément, et une obtention de la deuxième séquence d'images comprenant la soustraction, à chaque élément de chaque image de la séquence des deuxièmes images (B(x,y,t)), de la moyenne locale du secteur correspondant audit élément.

4.  Procédé de débruitage temporel de séquence d'images selon l'une des revendications précédentes, dans lequel le premier capteur et le deuxième capteur ne sont pas harmonisés spatialement, le procédé comprenant, à l'étape /c/, une obtention, par un circuit de calcul (C_CIRC), d'une première séquence d'images issue d'un pré-lissage de la séquence de premières images (A(x,y,t)) et d'une deuxième séquence d'images issue d'un pré-lissage de la séquence de deuxièmes images (B(x,y,t)).

5.  Programme d'ordinateur comprenant une suite d'instructions qui, lorsqu'elles sont exécutées par un processeur, conduisent le processeur à mettre en œuvre un procédé selon l'une des revendications 1 à 4.

6.  Support de stockage non transitoire lisible par ordinateur, ledit support stockant un programme d'ordinateur selon la revendication 5.

7.  Dispositif optronique (SYS) pour débruitage temporel d'une séquence d'images, ledit dispositif optronique comprenant :

    un premier capteur (SENS_A) agencé pour capturer une séquence de premières images (A(x,y,t)) correspondant à une scène donnée (SCN), chaque première image étant divisée en éléments associés chacun à un secteur correspondant de ladite première image,
    un deuxième capteur (SENS_B) opérant dans une bande spectrale différente du premier capteur ou ayant une sensibilité au moins dix fois supérieure à celle du premier capteur, le deuxième capteur étant agencé pour capturer une séquence de deuxièmes images (B(x,y,t)) correspondant à ladite scène donnée (SCN), chaque deuxième image correspondant à une première image, chaque deuxième image étant divisée en éléments associés chacun à un secteur correspondant de ladite deuxième image, chaque couple d'élément et de secteur associé de la deuxième image correspondant à un couple d'élément et de secteur associé de la première image correspondante,

un circuit de calcul (C_CIRC) agencé pour obtenir une première séquence d'images issue de la séquence de premières images (A(x,y,t)) et une deuxième séquence d'images issue de la séquence de deuxièmes images (B(x,y,t)),

un circuit de calcul (C_CIRC) agencé pour obtenir, pour chaque secteur de chacune des images des première et deuxième séquences d'images une pondération associée, la pondération étant telle qu'elle permet de faire ressortir le secteur dont la variance spatiale est la plus importante,

un circuit de calcul (C_CIRC) agencé pour obtenir une première séquence pondérée d'images, dont chaque élément de chaque image est égal à l'élément correspondant de la première séquence d'images pondéré par la pondération associée au secteur associé audit élément correspondant et une deuxième séquence pondérée d'images, dont chaque élément de chaque image est égal à l'élément correspondant de la deuxième séquence d'images pondéré par la pondération associée au secteur associé audit élément correspondant,

un circuit de calcul (C_CIRC) agencé pour obtenir une séquence d'images de variances améliorées (I(x,y,t)) résultant d'une combinaison de séquences d'images comprenant la première séquence pondérée d'images et la deuxième séquence pondérée d'images,

un circuit de calcul (C_CIRC) agencé pour obtenir une estimation de mouvement sur la base de la séquence d'images améliorées (I(x,y,t)) obtenue,

un circuit de calcul agencé pour obtenir, en fonction de l'estimation de mouvement calculée, un alignement spatial des images d'une séquence d'images à afficher issue de séquences d'images correspondant à la scène donnée et comprenant la séquence de premières images (A(x,y,t)) et la séquence de deuxièmes images (B(x, y,t)),

un circuit de calcul (C_CIRC) agencé pour effectuer un débruitage temporel, en fonction de l'alignement spatial déterminé, de la séquence d'images à afficher.

8. Dispositif optronique (SYS) selon la revendication 7, comprenant un circuit de sélection agencé pour sélectionner, en tant que séquence d'images à afficher qui doit être débruitée, l'une parmi la séquence de premières images (A(x,y,t)) et la séquence de deuxièmes images (B(x,y,t)).

9. Dispositif optronique (SYS) selon l'une des revendications 7 et 8, dans lequel le circuit de calcul (C_CIRC) agencé pour obtenir les première et deuxième séquences d'images est agencé pour calculer, pour chaque secteur de chacune des images de la séquence de premières images (A(x,y,t)) et de la séquence de deuxièmes images (B(x, y,t)), une moyenne locale dudit secteur, puis pour obtenir la première séquence d'images par soustraction à chaque élément de chaque image de la séquence des premières images (A(x,y,t)) de la moyenne locale du secteur correspondant audit élément, et pour obtenir la séquence de deuxièmes images par soustraction à chaque élément de chaque image de la séquence des deuxièmes images (B(x,y,t)) de la moyenne locale du secteur correspondant audit élément.

10. Dispositif optronique (SYS) selon l'une des revendications 7 à 9, dans lequel le premier capteur (SENS_A) et le deuxième capteur (SENS_B) ne sont pas harmonisés spatialement, dans lequel le circuit de calcul (C_CIRC) agencé pour obtenir les première et deuxième séquences d'images est agencé pour obtenir une première séquence d'images issue d'un pré-lissage de la séquence de premières images (A(x,y,t)) et une deuxième séquence d'images issue d'un pré-lissage de la séquence de deuxièmes images (B(x,y,t)).

**Patentansprüche**

1. Verfahren zur zeitlichen Rauschunterdrückung einer Folge von Bildern, wobei das Verfahren aufweist:

/a/ mit Hilfe eines ersten Sensors (SENS_A), eine Erfassung einer Folge von ersten Bildern (A(x,y,t)), die einer gegebenen Szene (SCN) entspricht, wobei jedes erste Bild in Elemente unterteilt ist, die jeweils mit einem entsprechenden Sektor des ersten Bilds verknüpft sind,

/b/ mit Hilfe eines zweiten Sensors (SENS_B), eine Erfassung einer Folge von zweiten Bildern (B(x,y,t)), die der gegebenen Szene (SCN) entspricht, wobei der zweite Sensor in einem Spektralband, das sich von demjenigen des ersten Sensors unterscheidet, arbeitet oder eine Empfindlichkeit hat, die mindestens zehn Mal höher als diejenige des ersten Sensors ist, wobei jedes zweite Bild einem ersten Bild entspricht, wobei jedes zweite Bild in Elemente unterteilt ist, die jeweils mit einem entsprechenden Sektor des zweiten Bilds verknüpft sind, wobei jedes Paar, bestehend aus Element und damit verknüpften Sektor, des zweiten Bilds einem Paar, bestehend aus Element und damit verknüpften Sektor, des entsprechenden ersten Bilds entspricht,

/c/ mit Hilfe einer Berechnungsschaltung (C_CIRC), eine Gewinnung einer ersten Folge von Bildern ausgehend von der Folge von ersten Bildern (A(x,y,t)), und einer zweiten Folge von Bildern ausgehend von der Folge von zweiten Bildern (B(x,y,t)),

/d/ mit Hilfe einer Berechnungsschaltung (C_CIRC), für jeden Sektor jedes der Bilder der ersten und der zweiten Folge von Bildern, eine Gewinnung einer zugehörigen Gewichtung, wobei die Gewichtung derart ist, dass sie erlaubt, den Sektor, dessen räumliche Varianz am stärksten ist, erkennbar werden zu lassen,

/e/ mit Hilfe einer Berechnungsschaltung (C_CIRC), eine Gewinnung einer gewichteten ersten Folge von Bildern, in der jedes Element jedes Bilds gleich dem entsprechenden Element der ersten Folge von Bildern ist, gewichtet mit der Gewichtung, die mit dem Sektor verknüpft ist, der mit dem entsprechenden Element verknüpft ist, und einer gewichteten zweiten Folge von Bildern, in der jedes Element jedes Bilds gleich dem entsprechenden Element der zweiten Folge von Bildern ist, gewichtet mit der Gewichtung, die mit dem Sektor verknüpft ist, der mit dem entsprechenden Element verknüpft ist,

/f/ mit Hilfe einer Berechnungsschaltung (C_CIRC), eine Gewinnung einer Folge von Bildern mit verbesserten Varianzen (I(x,y,t)), die aus einer Kombination von Folgen von Bildern, die die gewichtete erste Folge von Bildern und die gewichtete zweite Folge von Bildern aufweist, resultiert,

/g/ mit Hilfe einer Berechnungsschaltung (C_CIRC), eine Gewinnung einer Bewegungsschätzung auf Basis der gewonnenen Folge von verbesserten Bildern (I(x,y,t)),

/h/ mit Hilfe einer Berechnungsschaltung (C_CIRC), als Funktion der berechneten Bewegungsschätzung, eine Gewinnung einer räumlichen Ausrichtung der Bilder einer anzuzeigenden Folge von Bildern ausgehend von Folgen von Bildern, die der gegebenen Szene entsprechen und die Folge von ersten Bildern (A(x,y,t)) und die Folge von zweiten Bildern (B(x,y,t)) aufweisen,

/i/ mit Hilfe einer Berechnungsschaltung (C_CIRC), ein zeitliches Rauschunterdrücken der anzuzeigenden Folge von Bildern als Funktion der bestimmten räumlichen Ausrichtung.

2. Verfahren zur zeitlichen Rauschunterdrückung einer Folge von Bildern nach Anspruch 1, aufweisend ein Auswählen einer aus der Folge von ersten Bildern (A(x,y,t)) und der Folge von zweiten Bildern (B(x,y,t)) als anzuzeigende Folge von Bildern, die im Schritt /i/ rauschunterdrückt worden ist, mit Hilfe einer Auswahlschaltung.

3. Verfahren zur zeitlichen Rauschunterdrückung einer Folge von Bildern nach einem der vorstehenden Ansprüche, aufweisend im Schritt /c/:

/c1/ mit Hilfe einer Berechnungsschaltung (C_CIRC), für jeden Sektor jedes der Bilder der Folge von ersten Bildern (A(x,y,t)) und der Folge von zweiten Bildern (B(x,y,t)), eine Gewinnung eines lokalen Mittelwerts des Sektors, und

/c2/ mit Hilfe einer Berechnungsschaltung (C_CIRC), eine Gewinnung der ersten Folge von Bildern, aufweisend eine Subtraktion, in welcher jedem Element jedes Bilds der Folge von ersten Bildern (A(x,y,t)) der lokale Mittelwert des mit dem Element verknüpften Sektors subtrahiert wird, und eine Gewinnung der zweiten Folge von Bildern, aufweisend eine Subtraktion, in welcher jedem Element jedes Bilds der Folge von zweiten Bildern (B(x,y,t)) der lokale Mittelwert des mit dem Element verknüpften Sektors subtrahiert wird.

4. Verfahren zur zeitlichen Rauschunterdrückung einer Folge von Bildern, in welchem der erste Sensor und der zweite Sensor räumlich nicht aufeinander abgestimmt sind, wobei das Verfahren im Schritt /c/ aufweist: mit Hilfe einer Berechnungsschaltung (C_CIRC), eine Gewinnung einer ersten Folge von Bildern ausgehend von einer Vor-Glättung der Folge von ersten Bildern (A(x,y,t)), und einer zweiten Folge von Bildern ausgehend von einer Vor-Glättung der Folge von zweiten Bildern (B(x,y,t)).

5. Computerprogramm, aufweisend eine Abfolge von Befehlen, die, wenn sie von einem Prozessor ausgeführt werden, den Prozessor veranlassen, ein Verfahren nach einem der Ansprüche 1 bis 4 durchzuführen.

6. Nichtflüchtiger computerlesbarer Speicherträger, wobei der Speicherträger ein Computerprogramm nach Anspruch 5 speichert.

7. Optronik-Vorrichtung (SYS) zur zeitlichen Rauschunterdrückung einer Folge von Bildern, wobei die Optronik-Vorrichtung aufweist:

einen ersten Sensor (SENS_A), der konfiguriert ist, eine Folge von ersten Bildern (A(x,y,t)), die einer gegebenen Szene (SCN) entspricht, zu erfassen, wobei jedes erste Bild in Elemente unterteilt ist, die jeweils mit einem entsprechenden Sektor des ersten Bilds verknüpft sind,

einen zweiten Sensor (SENS B), der in einem Spektralband, das sich von demjenigen des ersten Sensors unterscheidet, arbeitet oder eine Empfindlichkeit hat, die mindestens zehn Mal höher als diejenige des ersten Sensors ist, wobei der zweite Sensor konfiguriert ist, eine Folge von zweiten Bildern (B(x,y,t)), die der gegebenen Szene (SCN) entspricht, zu erfassen, wobei jedes zweite Bild einem ersten Bild entspricht, wobei jedes zweite Bild in Elemente unterteilt ist, die jeweils mit einem entsprechenden Sektor des zweiten Bilds verknüpft sind, wobei jedes Paar, bestehend aus Element und damit verknüpften Sektor, des zweiten Bilds einem Paar, bestehend aus Element und damit verknüpften Sektor, des entsprechenden ersten Bilds entspricht,

eine Berechnungsschaltung (C_CIRC), die konfiguriert ist, ausgehend von der Folge von ersten Bildern (A(x, y,t)) eine erste Folge von Bildern und ausgehend von der Folge von zweiten Bildern (B(x,y,t)) eine zweite Folge von Bildern zu gewinnen,

eine Berechnungsschaltung (C_CIRC), die konfiguriert ist, für jeden Sektor jedes der Bilder der ersten und der zweiten Folge von Bildern eine zugehörige Gewichtung zu gewinnen, wobei die Gewichtung derart ist, dass sie erlaubt, den Sektor, dessen räumliche Varianz am stärksten ist, erkennbar werden zu lassen,

eine Berechnungsschaltung (C_CIRC), die konfiguriert ist, eine gewichtete erste Folge von Bildern, in der jedes Element jedes Bilds gleich dem entsprechenden Element der ersten Folge von Bildern ist, gewichtet mit der Gewichtung, die mit dem Sektor verknüpft ist, der mit dem entsprechenden Element verknüpft ist, und eine gewichtete zweite Folge von Bildern, in der jedes Element jedes Bilds gleich dem entsprechenden Element der zweiten Folge von Bildern ist, gewichtet mit der Gewichtung, die mit dem Sektor verknüpft ist, der mit dem entsprechenden Element verknüpft ist, zu gewinnen,

eine Berechnungsschaltung (C_CIRC), die konfiguriert ist, eine Folge von Bildern mit verbesserten Varianzen (I(x,y,t)) zu gewinnen, die aus einer Kombination von Folgen von Bildern, die die gewichtete erste Folge von Bildern und die gewichtete zweite Folge von Bildern aufweist, resultiert,

eine Berechnungsschaltung (C_CIRC), die konfiguriert ist, auf Basis der gewonnenen Folge von verbesserten Bildern (I(x,y,t)) eine Bewegungsschätzung zu gewinnen,

eine Berechnungsschaltung, die konfiguriert ist, als Funktion der berechneten Bewegungsschätzung eine räumliche Ausrichtung der Bilder einer anzuzeigenden Folge von Bildern zu gewinnen, ausgehend von Folgen von Bildern, die der gegebenen Szene entsprechen und die Folge von ersten Bildern (A(x,y,t)) und die Folge von zweiten Bildern (B(x,y,t)) aufweisen,

eine Berechnungsschaltung (C_CIRC), die konfiguriert ist, als Funktion der bestimmten räumlichen Ausrichtung eine zeitliche Rauschunterdrückung der anzuzeigenden Folge von Bildern durchzuführen.

8. Optronik-Vorrichtung (SYS) nach Anspruch 7, aufweisend eine Auswahlschaltung, die konfiguriert ist, eine aus der Folge von ersten Bildern (A(x,y,t)) und der Folge von zweiten Bildern (B(x,y,t)) als anzuzeigende Folge von Bildern, die rauschunterdrückt sein sollte, auszuwählen.

9. Optronik-Vorrichtung (SYS) nach einem der Ansprüche 7 und 8, in welcher die Berechnungsschaltung (C_CIRC), die konfiguriert ist, die erste und zweite Folge von Bildern zu gewinnen, konfiguriert ist,
für jeden Sektor jedes der Bilder der Folge von ersten Bildern (A(x,y,t)) und der Folge von zweiten Bildern (B(x,y, t)) einen lokalen Mittelwert des Sektors zu berechnen,
dann durch eine Subtraktion, in welcher jedem Element jedes Bilds der Folge von ersten Bildern (A(x,y,t)) der lokale Mittelwert des mit dem Element verknüpften Sektors subtrahiert wird, die erste Folge von Bildern zu gewinnen, und durch eine Subtraktion, in welcher jedem Element jedes Bilds der Folge von zweiten Bildern (B(x,y,t)) der lokale Mittelwert des mit dem Element verknüpften Sektors subtrahiert wird, die zweite Folge von Bildern zu gewinnen.

10. Optronik-Vorrichtung (SYS) nach einem der Ansprüche 7 bis 9,
in welcher der erste Sensor (SENS_A) und der zweite Sensor (SENS_B) räumlich nicht aufeinander abgestimmt sind,
in welcher die Berechnungsschaltung (C_CIRC), die konfiguriert ist, die erste und zweite Folge von Bildern zu gewinnen, konfiguriert ist,
ausgehend von einer Vor-Glättung der Folge von ersten Bildern (A(x,y,t)) eine erste Folge von Bildern und ausgehend von einer Vor-Glättung der Folge von zweiten Bildern (B(x,y,t)) eine zweite Folge von Bildern zu gewinnen.

**Claims**

1. A method for temporal denoising of a sequence of images, said method comprising:

/a/ capturing, by a first sensor (SENS_A), a sequence of first images (A(x,y,t)) corresponding to a given scene (SCN), each first image being divided into elements each associated with a corresponding area of said first image,
/b/ capturing, by a second sensor (SENS_B) a sequence of second images (B(x,y,t)) corresponding to said given scene (SCN), the second sensor operating in a spectral band different from the first sensor or having a sensitivity at least ten times greater than the one of the first sensor, each second image corresponding to a first image, each second image being divided into elements each associated with a corresponding area of said second image, each pair of element and associated area of the second image corresponding to a pair of element and associated area of the corresponding first image,
/c/ obtaining, by a calculation circuit (C_CIRC), a first sequence of images derived from the sequence of first images (A(x,y,t)) and a second sequence of images derived from the sequence of second images (B(x,y,t)),
/d/ obtaining, by a calculation circuit (C_CIRC), for each area of each of the images of the first and second sequences of images, an associated weight, the weighting being such as to highlight the sector with the greatest spatial variance,
/e/ obtaining, by a calculation circuit (C_CIRC), a first weighted sequence of images, in which each element of each image is equal to the corresponding element of the first sequence of images weighted by the weight associated with the area associated with said corresponding element, and a second weighted sequence of images, in which each element of each image is equal to the corresponding element of the second sequence of images weighted by the weight associated with the area associated with said corresponding element,
/f/ obtaining, by a calculation circuit (C_CIRC), a sequence of enhanced variance images (I(x,y,t)) resulting from combining sequences of images comprising the first weighted sequence of images and the second weighted sequence of images,
/g/ obtaining, by a calculation circuit (C_CIRC), a motion estimation based on the obtained sequence of enhanced variance images (I(x,y,t)),
/h/ obtaining, by a calculation circuit (C_CIRC), based on the calculated motion estimation, a spatial alignment of the images of a sequence of images to be displayed derived from sequences of images corresponding to the given scene and comprising the sequence of first images (A(x,y,t)) and the sequence of second images (B(x,y,t)),
/i/ a temporal denoising, by a calculation circuit (C_CIRC), based on the determined spatial alignment of the sequence of images to be displayed.

2. The method for temporal denoising of a sequence of images according to claim 1, comprising selecting, by a selection circuit, as a sequence of images to be displayed which is denoised in step /i/, one among the sequence of first images (A(x,y,t)) and the sequence of second images (B(x,y,t)).

3. The method for temporal denoising of a sequence of images according to any of the preceding claims, comprising, in step /c/:

/c1/ obtaining, by a calculation circuit (C_CIRC), for each area of each of the images of the sequence of first images (A(x,y,t)) and of the sequence of second images (B(x,y,t)), a local average of said area, and
/c2/ obtaining, by a calculation circuit (C_CIRC), the first sequence of images, comprising subtracting, from each element of each image of the sequence of first images (A(x,y,t)), the local average of the area corresponding to said element, and obtaining the second sequence of images, comprising subtracting, from each element of each image of the sequence of second images (B(x,y,t)), the local average of the area corresponding to said element.

4. The method for temporal denoising of a sequence of images according to any of the preceding claims, wherein the first sensor and the second sensor are not spatially harmonized, the method comprising, in step /c/, obtaining, by a calculation circuit (C_CIRC), a first sequence of images resulting from pre-smoothing the sequence of first images (A(x,y,t)) and a second sequence of images resulting from pre-smoothing the sequence of second images (B(x,y,t)).

5. Computer program comprising a sequence of instructions which, when executed by a processor, lead the processor to implement the method according to any of claims 1 to 4.

6. A non-transitory computer-readable storage medium, said medium storing a computer program according to claim 5.

7. Optoelectronic device (SYS) for temporal denoising of a sequence of images, said optoelectronic device comprising:

a first sensor (SENS_A) arranged to capture a sequence of first images (A(x,y,t)) corresponding to a given scene (SCN), each first image being divided into elements each associated with a corresponding area of said first image,

a second sensor (SENS_B) operating in a spectral band different from the first sensor or having a sensitivity at least ten times greater than the one of the first sensor,

the second sensor being arranged to capture a sequence of second images (B(x,y,t)) corresponding to said given scene (SCN), each second image corresponding to a first image, each second image being divided into elements each associated with a corresponding area of said second image, each pair of element and associated area of the second image corresponding to a pair of element and associated area of the corresponding first image,

a calculation circuit (C_CIRC) arranged to obtain a first sequence of images derived from the sequence of first images and a second sequence of images derived from the sequence of second images,

a calculation circuit (C_CIRC) arranged to obtain, for each area of each of the images of the first and second sequences of images, an associated weight, the weighting being such as to highlight the sector with the greatest spatial variance,

a calculation circuit (C_CIRC) arranged to obtain: a first weighted sequence of images, in which each element of each image is equal to the corresponding element of the first sequence of images weighted by the weight associated with the area associated with said corresponding element; and a second weighted sequence of images, in which each element of each image is equal to the corresponding element of the second sequence of images weighted by the weight associated with the area associated with said corresponding element,

a calculation circuit (C_CIRC) arranged to obtain a sequence of enhanced variance images (I(x,y,t)) resulting from combining sequences of images comprising the first weighted sequence of images and the second weighted sequence of images,

a calculation circuit (C_CIRC) arranged to obtain a motion estimation based on the obtained sequence of enhanced variance images (I(x,y,t)),

a calculation circuit (C_CIRC) arranged to obtain, based on the calculated motion estimation, a spatial alignment of the images of a sequence of images to be displayed derived from sequences of images corresponding to the given scene and comprising the sequence of first images (A(x,y,t)) and the sequence of second images (B(x,y,t)),

a calculation circuit (C_CIRC) arranged to perform a temporal denoising, based on the determined spatial alignment of the sequence of images to be displayed.

8. Optoelectronic device (SYS) according to claim 7, comprising a selection circuit arranged to select, as the sequence of images to be displayed which are to be denoised, one among the sequence of first images (A(x,y,t)) and the sequence of second images (B(x,y,t)).

9. Optoelectronic device (SYS) according to one of claims 7 and 8, wherein the calculation circuit (C_CIRC) arranged to obtain the first and second sequences of images is arranged to calculate, for each area of each of the images of the sequence of first images (A(x,y,t)) and of the sequence of second images (B(x,y,t)), a local average of said area, then to obtain the first sequence of images by subtracting, from each element of each image of the sequence of first images (A(x,y,t)), the local average of the area corresponding to said element, and to obtain the sequence of second images by subtracting, from each element of each image of the sequence of second images(B(x,y,t)), the local average of the area corresponding to said element.

10. Optoelectronic device (SYS) according to any of claims 7 to 9, wherein the first sensor (SENS_A) and the second sensor (SENS_B) are not spatially harmonized, wherein the calculation circuit (C_CIRC) arranged to obtain the first and second sequences of images is arranged to obtain the first sequence of images resulting from pre-smoothing the sequence of first images (A(x,y,t)) and the second sequence of images resulting from pre-smoothing the sequence of second images (B(x,y,t)).

FIG. 1

FIG. 2

**EP 3 114 831 B1**

## RÉFÉRENCES CITÉES DANS LA DESCRIPTION

**Documents brevets cités dans la description**

- US 2013250123 A
- US 2009002501 A
- US 2006119710 A
- FR 1050014